(19) Europäisches Patentamt / European Patent Office / Office européen des brevets

(11) **EP 4 572 492 A1**

(12) **EUROPEAN PATENT APPLICATION**
published in accordance with Art. 153(4) EPC

(43) Date of publication:
**18.06.2025 Bulletin 2025/25**

(21) Application number: **23852302.1**

(22) Date of filing: **13.07.2023**

(51) International Patent Classification (IPC):
$H04W\ 72/20^{(2023.01)}$ $H04W\ 16/14^{(2009.01)}$
$H04W\ 72/54^{(2023.01)}$ $H04W\ 92/18^{(2009.01)}$

(52) Cooperative Patent Classification (CPC):
**H04W 16/14; H04W 72/20; H04W 72/54; H04W 92/18**

(86) International application number:
**PCT/JP2023/025836**

(87) International publication number:
**WO 2024/034319 (15.02.2024 Gazette 2024/07)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **08.08.2022 JP 2022126478**

(71) Applicant: **Sony Group Corporation
Tokyo 108-0075 (JP)**

(72) Inventors:
• **KUSASHIMA, Naoki
  Tokyo 108-0075 (JP)**
• **SHIMEZAWA, Kazuyuki
  Tokyo 108-0075 (JP)**

(74) Representative: **Witte, Weller & Partner
Patentanwälte mbB
Postfach 10 54 62
70047 Stuttgart (DE)**

(54) **COMMUNICATION METHOD AND COMMUNICATION DEVICE**

(57) A communication method of the present disclosure includes performing sidelink communication with a first communication device. The communication method includes performing scheduling of a resource for performing sidelink communication using a first PSCCH. The communication method includes transmitting a second PSCCH different from the first PSCCH on the scheduled resource.

FIG.1

EP 4 572 492 A1

**Description**

Field

The present disclosure relates to a communication method and a communication device.

Background

Sidelink communication is known as one form of cellular communication. In recent years, in order to enable inexpensive and easy use of the sidelink communication, a technology for enabling the sidelink communication using an unlicensed band has been developed.

Citation List

Non Patent Literature

Non Patent Literature 1: "R1-2205034, Qualcomm, "Physical Channel Design for Sidelink on Unlicensed Spectrum", 3GPP TSG-RAN WG1 #109 e, May 2022", [online], [Searched on June 27, 2022], Internet <https://www.3gpp.org/ftp/tsg_ran/WG1_RL1/TSGR1_109-e/Docs/R1-2205034.zip>

Summary

Technical Problem

When the unlicensed band is used, the communication device is required to perform LBT and transmit a signal immediately after a COT is successfully acquired. On the other hand, in the cellular communication, data transmission is started in a predetermined scheduling time unit (for example, a slot).
For that reason, when COT acquisition timing and slot start timing do not match, a reservation signal that is not data and only for occupying a channel is transmitted from the COT acquisition timing to a slot start position.
Since the reservation signal does not include data, if a section after the COT acquisition until the next slot boundary is long, a transmission section of the reservation signal is long and frequency utilization efficiency is deteriorated.
Therefore, the present disclosure proposes a communication method and a communication device that can further suppress deterioration in frequency utilization efficiency.
Note that the problem or the object explained above is merely one of a plurality of problems or objects that can be solved or achieved by a plurality of embodiments disclosed in the present specification. Solution to Problem
A communication method of the present disclosure includes performing sidelink communication with a first communication device. The communication method includes performing scheduling of a resource for performing sidelink communication using a first PSCCH. The communication method includes transmitting a second PSCCH different from the first PSCCH on the scheduled resource.

Brief Description of Drawings

FIG. 1 is a diagram for explaining an overview of a communication method according to an embodiment of the present disclosure.
FIG. 2 is a diagram illustrating a configuration example of a communication system according to the embodiment of the present disclosure.
FIG. 3 is a diagram illustrating a configuration example of a management device according to the embodiment of the present disclosure.
FIG. 4 is a diagram illustrating a configuration example of a base station according to the embodiment of the present disclosure.
FIG. 5 is a diagram illustrating a configuration example of a relay station according to the embodiment of the present disclosure.
FIG. 6 is a diagram illustrating a configuration example of a terminal device according to the embodiment of the present disclosure.
FIG. 7 is a diagram illustrating an example of a frame configuration of an NR.
FIG. 8 is a diagram illustrating an overview of sidelink communication.

FIG. 9 is a diagram illustrating an example of a frame configuration of a sidelink.

FIG. 10 is a diagram illustrating an example of a frame configuration of a sidelink.

FIG. 11 is a diagram illustrating a resource pool of a sidelink.

FIG. 12 is a diagram for explaining a resource allocation mode.

FIG. 13 is a diagram illustrating an example of multi-slot scheduling of a PDSCH.

FIG. 14 is a diagram illustrating an example of multi-slot scheduling of a PUSCH.

FIG. 15 is a diagram for explaining four types of LBT categories.

FIG. 16 is a diagram illustrating a frame base configuration of frame-based equipment.

FIG. 17 is a diagram illustrating an example of reservation signal transmission in a sidelink.

FIG. 18 is a diagram illustrating an example of mini-slot scheduling in a sidelink.

FIG. 19 is a diagram illustrating an example of scheduling in a sidelink of an unlicensed band.

FIG. 20 is a diagram illustrating an example of multi-slot scheduling in a sidelink of an unlicensed band according to the embodiment of the present disclosure.

FIG. 21 is a diagram illustrating another example of the multi-slot scheduling in the sidelink of the unlicensed band according to the embodiment of the present disclosure.

FIG. 22 is a diagram illustrating another example of a configuration of a physical channel in the sidelink of the unlicensed band according to the embodiment of the present disclosure.

FIG. 23 is a diagram illustrating another example of the configuration of the physical channel in the sidelink of the unlicensed band according to the embodiment of the present disclosure.

FIG. 24 is a diagram illustrating an example of a second PSCCH in multi-slot scheduling according to the embodiment of the present disclosure.

FIG. 25 is a diagram illustrating an example of a monitoring/sensing period adjustment method according to the embodiment of the present disclosure.

FIG. 26 is a diagram illustrating another example of the monitoring/sensing period adjustment method according to the embodiment of the present disclosure.

FIG. 27 is a diagram illustrating another example of the monitoring/sensing period adjustment method according to the embodiment of the present disclosure.

FIG. 28 is a diagram illustrating another example of the monitoring/sensing period adjustment method according to the embodiment of the present disclosure.

FIG. 29 is a diagram illustrating an example of a hidden terminal problem in the sidelink of the unlicensed band.

FIG. 30 is a diagram illustrating an example of transfer of COT information in the sidelink of the unlicensed band according to the embodiment of the present disclosure.

FIG. 31 is a diagram illustrating an example of transfer of COT information according to the embodiment of the present disclosure.

FIG. 32 is a diagram illustrating another example of the transfer of the COT information according to the embodiment of the present disclosure.

Description of Embodiments

Embodiments of the present disclosure are explained in detail below with reference to the drawings. Note that, in the embodiments explained below, redundant explanation is omitted by denoting the same parts with the same reference numerals and signs.

In addition, unless otherwise specified, the techniques, functions, methods, configurations, procedures, and all other descriptions described below are applicable to LTE and NR.

In the present specification and the drawings, a plurality of components having substantially the same functional configuration may be distinguished by adding different numbers after the same reference signs. For example, a plurality of components having substantially the same functional configuration are distinguished as terminal devices $40_1$, $40_2$, and $40_3$ according to necessity. However, when it is not particularly necessary to distinguish each of a plurality of components having substantially the same functional configuration, only the same reference numeral is added. For example, when it is unnecessary to particularly distinguish the terminal devices $40_1$, $40_2$, and $40_3$, the terminal devices $40_1$, $40_2$, and $40_3$ are simply referred to as terminal devices 40.

One or a plurality of embodiments (including examples and modifications) explained below can be respectively independently implemented. On the other hand, at least a part of the plurality of embodiments explained below may be implemented in combination with at least a part of other embodiments as appropriate. These plurality of embodiments can include new characteristics different from one another. Therefore, these plurality of embodiments can contribute to solving objects or problems different from one another and can achieve effects different from one another.

<<1. Overview>>

Radio access technology (RAT) such as long term evolution (LTE) and new radio (NR) has been studied in the 3rd generation partnership project (3GPP) (registered trademark). The LTE and the NR are types of a cellular communication technology and enable mobile communication of a terminal device by arranging a plurality of areas covered by a base station in a cell shape. At this time, a single base station may manage a plurality of cells.

Note that, in the following explanation, it is assumed that "LTE" includes LTE-A (LTE-Advanced), LTE-A Pro (LTE-Advanced Pro), and E-UTRA (Evolved Universal Terrestrial Radio Access). The NR includes NRAT (New Radio Access Technology) and FE-UTRA (Further E-UTRA). In the following explanation, a cell adapted to the LTE is referred to as LTE cell and a cell adapted to the NR is referred to as NR cell.

The NR is a next generation (fifth generation) radio access technology (RAT) of the LTE. The NR is a radio access technology that can cope with various use cases including eMBB (Enhanced Mobile Broadband), mMTC (Massive Machine Type Communications), and URLLC (Ultra-Reliable and Low Latency Communications). The NR has been studied aiming at a technical framework adapted to usage scenarios, requirement conditions, arrangement scenarios, and the like in these use cases.

Sidelink communication has been introduced in 3GPP (registered trademark) with communication for public safety and vehicle to anything (V2X) as main use cases. In recent years, utilization of the sidelink communication has been expected for not only the V2X but also commercial use communication. Examples of the commercial use communication include XR(VR (Virtual Reality), AR (Augmented Reality), or MR (Mixed Reality)) gaming, real-time sharing of XR content, media sharing, wireless tethering, an industrial IoT (Internet of Things) network, and a home network.

The commercial use communication requires provision of services that are inexpensive and easy in addition to high quality. Therefore, in the present embodiment, sidelink communication using an unlicensed band is considered. The unlicensed band is a frequency band that can be used by anyone. For that reason, when the unlicensed band is used, inexpensive and easy service provision can be implemented. Note that the unlicensed band is sometimes called unlicensed spectrum, licensed shared band, shared spectrum, or cell with CCA. An operation using the unlicensed band is sometimes called operation with shared spectrum.

When the unlicensed band is used, the communication device is required to perform LBT and transmit a signal immediately after a COT is successfully acquired. On the other hand, in the cellular communication, data transmission is started in a predetermined scheduling time unit (for example, a slot).

For that reason, when COT acquisition timing and slot start timing do not match, a reservation signal that is not data and only for occupying a channel is transmitted from the COT acquisition timing to a slot start position.

Some predetermined scheduling time unit has a plurality of lengths. For example, in the cellular communication, a slot is specified. Further, in NR, scheduling can be performed in a time section shorter than the slot. For example, in downlink and uplink of the NR, scheduling can be performed with any length of 2 symbols to 13 symbols in a slot including 14 symbols. A time section of scheduling shorter than the slot is sometimes called mini-slot or sub-slot.

By introducing the mini-slot into the sidelink communication in the unlicensed band, the length of the reservation signal explained above can be further reduced. However, since control information is included in each mini-slot, if scheduling is performed in units of mini-slots, an overhead for transmitting the control information increases. This increase in overhead is likely to cause deterioration in communication quality and deterioration in frequency utilization efficiency.

Therefore, a method of suppressing an increase in the overhead of the control information by enabling the communication device to perform scheduling in units of mini-slots and in units of slots is conceivable. However, in this case, it is likely that another communication device performing communication in one scheduling time unit (for example, the slot) overlooks control information transmitted in the other scheduling time unit (for example, the mini-slot).

As explained above, if the other communication device overlooks the control information transmitted by the communication device, it is likely that the other communication device starts communication in a communication section scheduled by the communication device and communication efficiency in the sidelink communication is deteriorated.

Therefore, in the present embodiment, the above problem is solved by a method of performing sidelink communication using different two PSCCHs.

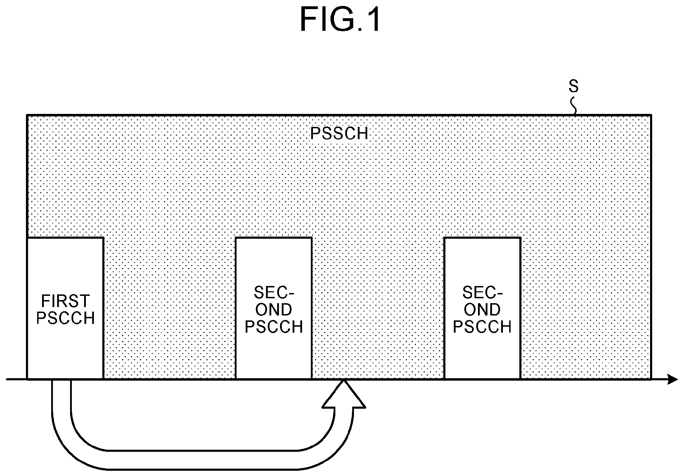

FIG. 1 is a diagram for describing an overview of a communication method according to an embodiment of the present disclosure. As illustrated in FIG. 1, when performing sidelink communication with a first communication device, a communication device schedules PSSCH using a resource S for performing sidelink communication using a first PSCCH. The communication device transmits the second PSCCH different from the first PSCCH using the resource S on which the scheduling is performed.

As explained above, since the communication device transmits the second PSCCH different from the first PSCCH for performing scheduling, the other communication device can receive the second PSCCH even if the other communication device overlooks the first PSCCH. The other communication device can check the resource scheduled by the communication device with the second PSCCH. Accordingly, communication efficiency (frequency utilization efficiency) can be further improved in the sidelink communication.

<<2. Configuration of a communication system>>

First, a configuration of a communication system 1 is specifically explained with reference to the drawings.

<Overall configuration of the communication system>

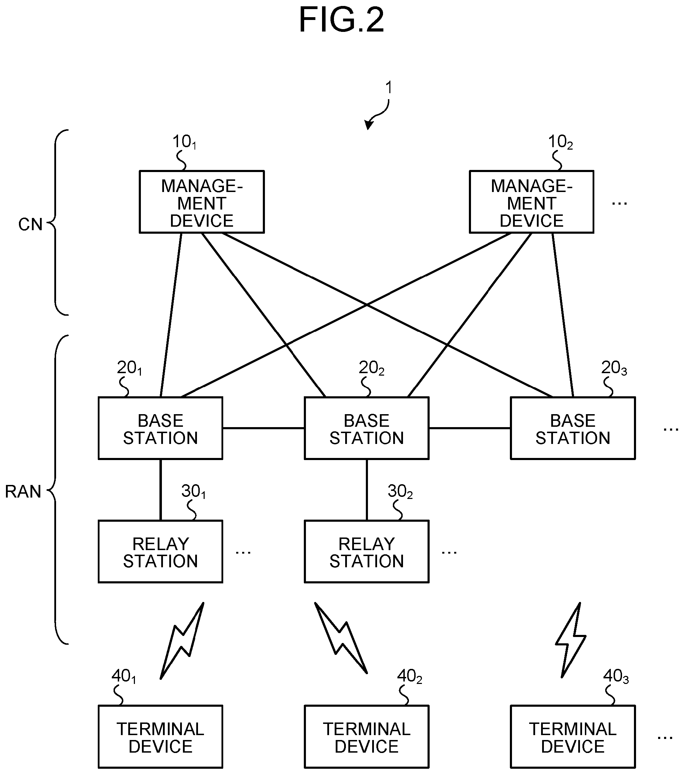

FIG. 2 is a diagram illustrating a configuration example of the communication system 1 according to the embodiment of the present disclosure. The communication system 1 includes a management device 10, a base station 20, a relay station 30, and a terminal device 40. The communication system 1 provides a user with a wireless network capable of performing mobile communication by wireless communication devices configuring the communication system 1 operating in cooperation. The wireless network in the present embodiment is configured by, for example, a wireless access network and a core network. Note that, in the present embodiment, the wireless communication device is a device having a function of wireless communication. In the example illustrated in FIG. 2, the base station 20, the relay station 30, and the terminal device 40 correspond to the wireless communication devices. In the following explanation, the wireless communication device is sometimes simply referred to as communication device.

The communication system 1 may include a plurality of management devices 10, a plurality of base stations 20, a plurality of relay stations 30, and a plurality of terminal devices 40. In the example illustrated in FIG. 2, the communication system 1 includes management devices $10_1$ and $10_2$ as the management device 10 and includes base stations $20_1$ and $20_2$ as the base station 20. The communication system 1 includes relay stations $30_1$ and $30_2$ and the like as the relay station 30 and includes terminal devices $40_1$, $40_2$, and $40_3$ and the like as the terminal device 40.

Note that the devices in the figure may be considered devices in a logical sense. That is, a part of the devices in the figure may be implemented by a virtual machine (VM), a container (Container), and the like, which may be implemented on physically the same hardware.

Note that the communication system 1 may support a radio access technology (RAT) such as LTE (Long Term Evolution) and NR (New Radio). The LTE and the NR are types of a cellular communication technology and enable mobile communication of the terminal device 40 by disposing, in a cell shape, a plurality of areas covered by the base station 20.

Note that a wireless access scheme used by the communication system 1 is not limited to the LTE and the NR and may be another wireless access scheme such as W-CDMA (Wideband Code Division Multiple Access) or cdma2000 (Code Division Multiple Access 2000).

The base station 20 or the relay station 30 configuring the communication system 1 may be a ground station or may be a non-ground station. The non-ground station may be a satellite station or may be an aircraft station. If the non-ground station is the satellite station, the communication system 1 may be a Bent-pipe (Transparent) type mobile satellite communication system.

Note that, in the present embodiment, the ground station (also referred to as ground base station) refers to the base station 20(including the relay station 30) installed on the ground. Here, the "ground" is a ground in a broad sense including not only the land but also underground, on water, and underwater. Note that, in the following explanation, the description of "ground station" may be replaced with "gateway".

Note that the base station 20 in the LTE is sometimes called eNodeB (Evolved Node B) or an eNB. The NR base station 20 is sometimes called gNodeB or gNB. In the LTE and the NR, the terminal device 40 (also referred to as mobile station or terminal) is sometimes called user equipment (UE). Note that the terminal device 40 is a type of a communication device and is also called mobile station or terminal.

In the present embodiment, the concept of the communication device includes not only a portable mobile body device (terminal device) such as a portable terminal but also a device installed in a structure or a mobile body. The structure or the mobile body itself may be regarded as the communication device. The concept of the communication device includes not only the terminal device 40 but also the base station 20 and the relay station 30. The communication device is a type of a processing device and an information processing device. The communication device can also be referred to as transmission device or reception device.

In the following explanation, configurations of the devices configuring the communication system 1 are specifically explained. Note that the configurations of the devices explained below are merely an example. The configurations of the devices may be different from the configurations explained below.

<2.1. Configuration of the management device>

Subsequently, a configuration of the management device 10 is explained.

The management device 10 is a device that manages a wireless network. For example, the management device 10 is a device that manages communication of the base station 20. The management device 10 may be, for example, a device having a function of an MME (Mobility Management Entity). The management device 10 may be a device having a function as an AMF (Access and Mobility Management Function) and/or an SMF (Session Management Function).

Naturally, the functions of the management device 10 are not limited to the MME, the AMF, and the SMF. The management device 10 may be a device having a function as an NSSF (Network Slice Selection Function), an AUSF (Authentication Server Function), a PCF (Policy Control Function), and a UDM (Unified Data Management). The management device 10 may be a device having a function of an HSS (Home Subscriber Server).

Note that the management device 10 may have a function of a gateway. For example, the management device 10 may have a function of an S-GW (Serving Gateway) or a P-GW (Packet Data Network Gateway). The management device 10 may have a function as a user plane function (UPF).

The core network is configured from a plurality of network functions. The network functions may be aggregated into one physical device or may be distributed to a plurality of physical devices. That is, the management device 10 can be dispersedly disposed in a plurality of devices. Further, this distributed disposition may be controlled to be dynamically executed. The base station 20 and the management device 10 configure one network and provide a wireless communication service to the terminal device 40. The management device 10 is connected to the Internet. The terminal device 40 can use, via the base station 20, various services provided via the Internet.

Note that the management device 10 may not always be a device configuring the core network. For example, it is assumed that the core network is a core network of W-CDMA (Wideband Code Division Multiple Access) or cdma2000 (Code Division Multiple Access 2000). At this time, the management device 10 may be a device that functions as an RNC (radio network Controller).

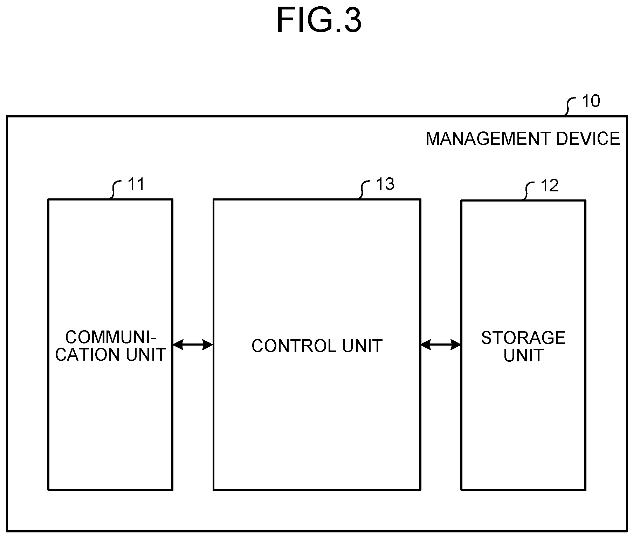

FIG. 3 is a diagram illustrating a configuration example of the management device 10 according to the embodiment of the present disclosure. The management device 10 includes a communication unit 11, a storage unit 12, and a control unit 13. Note that the configuration illustrated in FIG. 3 is a functional configuration. Hardware configuration may be different from the functional configuration. The functions of the management device 10 may be statically or dynamically distributed and implemented in a plurality of physically separated components. For example, the management device 10 may configured by a plurality of server devices.

The communication unit 11 is a communication interface for communicating with other devices. The communication unit 11 may be a network interface or may be an equipment connection interface. For example, the communication unit 11 may be a LAN (Local Area Network) interface such as an NIC (Network Interface Card) or may be a USB interface configured by a USB (Universal Serial Bus) host controller, a USB port, and the like. The communication unit 11 may be a wired interface or a wireless interface. The communication unit 11 functions as communication means of the management device 10. The communication unit 11 communicates with the base station 20 and the like according to control of the control unit 13.

The storage unit 12 is a data readable/writable storage device such as a DRAM (Dynamic Random Access Memory), an SRAM (Static Random Access Memory), a flash memory, or a hard disk. The storage unit 12 functions as storage means of the management device 10. The storage unit 12 stores, for example, a connection state of the terminal device 40. For example, the storage unit 12 stores a state of RRC (Radio Resource Control) or a state of ECM (EPS Connection Management) or 5G System CM (Connection Management) of the terminal device 40. The storage unit 12 may function as a home memory that stores position information of the terminal device 40.

The control unit 13 is a controller that controls the units of the management device 10. The control unit 13 is implemented by a processor such as a CPU (Central Processing Unit), an MPU (Micro Processing Unit), or a GPU (Graphics Processing Unit). For example, the control unit 13 is implemented by the processor executing various programs stored in a storage device inside the management device 10 using a RAM (Random Access Memory) or the like as a work area. Note that the control unit 13 may be implemented by an integrated circuit such as an ASIC (Application Specific Integrated Circuit) or an FPGA (Field Programmable Gate Array). All of the CPU, the MPU, the GPU, the ASIC, and the FPGA can be regarded as the controller.

<2.2. Base station>

The base station 20 is a communication device that operates a cell and provides a wireless communication service to one or more terminal devices 40 located inside the coverage of the cell. The cell is operated according to any wireless communication scheme such as LTE or NR. The base station 20 is connected to a core network. The core network is connected to a packet data network through a gateway device.

Note that the base station 20 may be configured by a set of a plurality of physical or logical devices. For example, in the embodiment of the present disclosure, the base station 20 may be distinguished into a plurality of devices of a BBU (Baseband Unit) and an RU (Radio Unit) and may be interpreted as an aggregate of the plurality of devices. Further or alternatively, in the embodiment of the present disclosure, the base station 20 may be either or both of the BBU and the RU. The BBU and the RU may be connected by a predetermined interface (for example, an eCPRI). Further or alternatively, the RU may be called Remote Radio Unit (RRU) or Radio DoT (RD). Further or alternatively, the RU may correspond to a gNB-DU explained below. Further or alternatively, the BBU may correspond to a gNB-CU explained below. Alternatively, the RU may be connected to a gNB-DU explained below. Further, the BBU may correspond to a combination of the gNB-CU and the gNB-DU explained below. Further or alternatively, the RU may be a device formed integrally with an antenna. An antenna (for example, the antenna formed integrally with the RU) included in the base station 20 may adopt an Advanced Antenna System and support MIMO (for example, FD-MIMO) and beam forming. In the Advanced Antenna System, an antenna (for example, the antenna formed integrally with the RU) included in the base station 20 may include, for example, 64 transmission antenna ports and 64 reception antenna ports.

A plurality of the base stations 20 may be connected to one another. The one or more base stations 20 may be included in a radio access network (RAN). That is, the base station 20 may be simply called RAN, RAN node, AN (Access Network), or AN node. The RAN in the LTE is called EUTRAN (Enhanced Universal Terrestrial RAN). The RAN in the NR is referred to as NGRAN. The RAN in W-CDMA (UMTS) is referred to as UTRAN. The base station 20 of the LTE is called eNodeB (Evolved Node B) or eNB. That is, the EUTRAN includes one or more eNodeBs (eNBs). The base station 20 of the NR is called gNodeB or gNB. That is, the NGRAN includes one or more of gNBs. Further, the EUTRAN may include the gNB (an en-gNB) connected to a core network (EPC) in an LTE communication system (EPS). Similarly, the NGRAN may include an ng-eNB connected to a core network 5GC in a 5G communications system (5GS). Further or alternatively, when the base station 20 is the eNB, the gNB, or the like, the base station 20 may be called 3GPP Access. Further or alternatively, when the base station 20 is a wireless access point (e. g., an access point of WiFi (registered trademark), the base station 20 may be called Non-3GPP Access. Further or alternatively, the base station 20 may be an optical extension device called RRH (Remote Radio Head). Further or alternatively, when the base station 20 is the gNB, the base station 20 may be called combination of the gNB CU (Central Unit) and the gNB DU (Distributed Unit) or any one of the gNB CU and the gNB DU. The gNB CU (Central Unit) hosts, for communication with the UE, a plurality of upper layers (for example, RRC, SDAP, and PDCP) of an Access Stratum. On the other hand, the gNB-DU hosts a plurality of lower layers (for example, RLC, MAC, and PHY) of the Access Stratum. That is, among messages and information explained below, RRC signalling (for example, various SIBs including MIB and SIB1, an RRCSetup message, and an RRCReconfiguration message) may be generated by the gNB CU and, on the other hand, a DCI and various physical channels (for example, PDCCH and PBCH) explained below may be generated by the gNB-DU. Alternatively, in the RRC signalling, for example, a part of configurations (configuration information) such as IE: cellGroupConfig may be generated by the gNB-DU and the remaining configurations may be generated by the gNB-CU. These configurations (configuration information) may be transmitted and received by an F1 interface explained below. The base station 20 may be configured to be capable of communicating with another base station 20. For example, when a plurality of base stations 20 are combinations of eNBs or eNBs and en-gNBs, the base stations 20 may be connected by an X2 interface. Further or alternatively, when the plurality of base stations 20 are combinations of gNBs or gn-eNBs and gNBs, the devices may be connected by an Xn interface. Further or alternatively, when the plurality of base stations 20 are a combination of gNB CUs (Central Units) and gNB DUs (Distributed Units), the devices may be connected by the F1 interface explained above. A message/information (RRC signalling or DCI information and Physical Channel) explained below may be communicated (for example, via the X2, Xn, or F1 interface) among the plurality of base stations 20.

Further, as explained above, the base station 20 may be configured to manage a plurality of cells. A cell provided by the base station 20 is called Serving cell. The Serving cell includes a PCell (Primary Cell) and an SCell (Secondary Cell). When Dual Connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), or NR-NR Dual Connectivity) is provided to the UE (for example, the terminal device 40), the PCell and zero or one or more SCell(s) provided by an MN (Master Node) are called Master Cell Group. Further, the Serving cell may include a PSCell (Primary Secondary Cell or Primary SCG Cell). That is, when the Dual Connectivity is provided to the UE, the PSCell and zero or one or more SCell(s) provided by the SN (Secondary Node) are called Secondary Cell Group (SCG). Unless special setting (for example, PUCCH on SCell) is performed, a physical uplink control channel (PUCCH) is transmitted by the PCell and the PSCell but is not transmitted by the SCell. A Radio Link Failure is also detected in the PCell and the PSCell but is not detected in the SCell (may not be detected). As explained above, since the PCell and the PSCell have a special role in the Serving Cell (s), the PCell and the PSCell are also called Special Cells (SpCells). One Downlink Component Carrier and one Uplink Component Carrier may be associated with one cell. A system bandwidth corresponding to one cell may be divided into a plurality of bandwidth parts. In this case, one or more Bandwidth Parts (BWPs) may be set for the UE and one Bandwidth Part may be used for the UE as an Active BWP. Wireless resources (for example, a frequency band, a numerology (subcarrier spacing), and a slot format (a slot configuration)) that can be used by the terminal device 40 may be different for each cell, each component carrier, or each BWP.

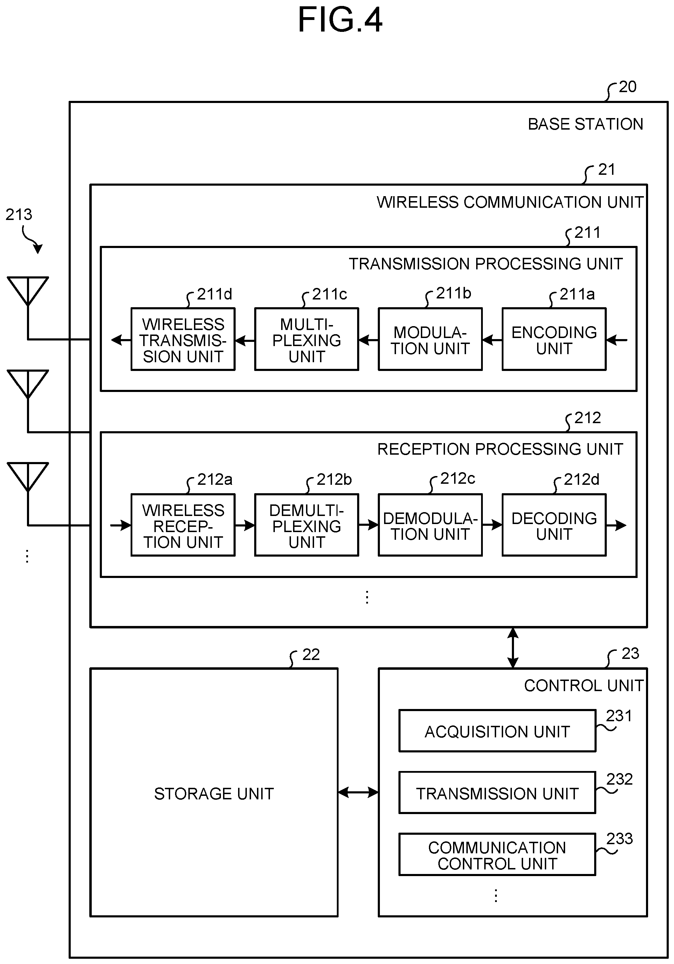

FIG. 4 is a diagram illustrating a configuration example of the base station 20 according to the embodiment of the present disclosure. The base station 20 includes a wireless communication unit 21, a storage unit 22, and a control unit 23. Note that the configuration illustrated in FIG. 4 is a functional configuration. A hardware configuration may be different from this configuration. The functions of the base station 20 may be implemented in a distributed manner in a plurality of physically separated components.

The wireless communication unit 21 is a signal processing unit for wirelessly communicating with other wireless communication devices (for example, the terminal device 40). The wireless communication unit 21 operates under the control of the control unit 23. The wireless communication unit 21 is adapted to one or a plurality of wireless access schemes. For example, the wireless communication unit 21 is adapted to both of the NR and the LTE. The wireless communication unit 21 may be adapted to W-CDMA or cdma2000 in addition to the NR or the LTE. The wireless communication unit 21 may be adapted to an automatic retransmission technology such as HARQ (Hybrid Automatic Repeat reQuest).

The wireless communication unit 21 includes a transmission processing unit 211, a reception processing unit 212, and an antenna 213. The wireless communication unit 21 may include a plurality of transmission processing units 211, a plurality of reception processing units 212, and a plurality of antennas 213. Note that, when the wireless communication unit 21 is adapted to a plurality of wireless access schemes, the units of the wireless communication unit 21 can be configured individually for each of the wireless access schemes. For example, the transmission processing unit 211 and the reception processing unit 212 may be individually configured by the LTE and the NR. The antenna 213 may be configured by a plurality of antenna elements (for example, a plurality of patch antennas). In this case, the wireless communication unit 21 may be configured to be capable of performing beamforming. The wireless communication unit 21 may be configured to be capable of performing polarization beamforming using vertically polarized waves (V-polarized waves) and horizontally polarized waves (H-polarized waves).

The transmission processing unit 211 performs transmission processing for downlink control information and downlink data. For example, the transmission processing unit 211 encodes the downlink control information and the downlink data input from the control unit 23 using an encoding scheme such as block encoding, convolutional encoding, turbo encoding, or the like. Here, as the encoding, encoding by a polar code or encoding by an LDPC code (Low Density Parity Check Code) may be performed. Then, the transmission processing unit 211 modulates encoded bits with a predetermined modulation scheme such as BPSK, QPSK, 16QAM, 64QAM, or 256QAM. In this case, signal points on a constellation do not always need to be equidistant. The constellation may be a non uniform constellation (NUC). Then, the transmission processing unit 211 multiplexes modulation symbols of channels and a downlink reference signal and arranges the multiplexed symbols and the multiplexed downlink reference signal in a predetermined resource element. Then, the transmission processing unit 211 performs various kinds of signal processing on the multiplexed signal. For example, the transmission processing unit 211 performs processing such as conversion into a frequency domain by fast Fourier transform, addition of a guard interval (cyclic prefix), generation of a baseband digital signal, conversion into an analog signal, quadrature modulation, up-conversion, removal of an extra frequency component, and amplification of power. The signal generated by the transmission processing unit 211 is transmitted from the antenna 213.

The reception processing unit 212 processes an uplink signal received via the antenna 213. For example, the reception processing unit 212 performs down-conversion, removal of an unnecessary frequency component, control of an amplification level, quadrature demodulation, conversion into a digital signal, removal of a guard interval (cyclic prefix), extraction of a frequency domain signal by fast Fourier transform, and the like on the uplink signal. Then, the reception processing unit 212 separates uplink channels such as a PUSCH (Physical Uplink Shared Channel) and a PUCCH (Physical Uplink Control Channel) and an uplink reference signal from the signals subjected to these kinds of processing. Further, the reception processing unit 212 demodulates the received signal using a modulation scheme such as BPSK (Binary Phase Shift Keying) or QPSK (Quadrature Phase Shift Keying) with respect to the modulation symbol of the uplink channel. The modulation scheme used for the demodulation may be 16QAM (Quadrature Amplitude Modulation), 64QAM, or 256QAM. In this case, signal points on a constellation do not always need to be equidistant. The constellation may be a non-uniform constellation (NUC). The reception processing unit 212 performs decoding processing on encoded bits of the demodulated uplink channels. Decoded uplink data and uplink control information are output to the control unit 23.

The antenna 213 is an antenna device (an antenna unit) that mutually converts a current and a radio wave. The antenna 213 may be configured by one antenna element (for example, one patch antenna) or may be configured by a plurality of antenna elements (for example, a plurality of patch antennas). When the antenna 213 is configured by a plurality of antenna elements, the wireless communication unit 21 may be configured to be capable of performing beamforming. For example, the wireless communication unit 21 may be configured to generate a directional beam by controlling the directivity of a radio signal using the plurality of antenna elements. Note that the antenna 213 may be a dual-polarized antenna. When the antenna 213 is a dual-polarized antenna, the wireless communication unit 21 may use vertically polarized waves (V-polarized waves) and horizontally polarized waves (H-polarized waves) in transmitting radio signals. Then, the wireless communication unit 21 may control the directivity of the radio signal transmitted using the vertically polarized wave and the horizontally polarized wave. Furthermore, the wireless communication unit 21 may transmit and receive spatially multiplexed signals via a plurality of layers including a plurality of antenna elements.

The storage unit 22 is a data readable/writable storage device such as a DRAM, an SRAM, a flash memory, or a hard disk. The storage unit 22 functions as storage means of the base station 20.

The control unit 23 is a controller that controls the units of the base station 20. The control unit 23 is implemented by a processor such as a CPU (Central Processing Unit) or an MPU (Micro Processing Unit). For example, the control unit 23 is implemented by the processor executing various programs stored in a storage device inside the base station 20 using a RAM (Random Access Memory) or the like as a work area. Note that the control unit 23 may be implemented by an integrated circuit such as an ASIC (Application Specific Integrated Circuit) or an FPGA (Field Programmable Gate Array). All of the CPU, the MPU, the ASIC, and the FPGA can be regarded as a controller. The control unit 23 may be implemented by a GPU (Graphics Processing Unit) in addition to or instead of the CPU.

As illustrated in FIG. 4, the control unit 23 includes an acquisition unit 231, a transmission unit 232, and a communication control unit 233. Blocks (the acquisition unit 231 to the communication control unit 233) configuring the control unit 23 are respectively functional blocks indicating functions of the control unit 23. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. A configuration method for the functional blocks is optional. Note that the control unit 23 may be configured by functional units different from the functional blocks explained above. Operations of the control unit 23 may be the same as operations of the blocks of a control unit 43 of the terminal device 40.

<2.3. Configuration of the relay station>

The relay station 30 is a device serving as a relay station of the base station 20. The relay station 30 is a type of base station 20. The relay station 30 is a type of an information processing device. The relay station 30 can be replaced as relay base station. Furthermore, the relay station 30 may be a device called a repeater (e. g., RF Repeater, Smart Repeater, Network Controlled Repeater, or Intelligent Surface).

The relay station 30 is capable of performing wireless communication such as NOMA communication with the terminal device 40. The relay station 30 relays communication between the base station 20 and the terminal device 40. Note that the relay station 30 may be configured to be capable of wirelessly communicating with the other relay stations 30 and the other base stations 20. The relay station 30 may be a ground station device or may be a non-ground station device. The relay station 30 configures a wireless access network RAN in conjunction with the base station 20.

Note that the relay station 30 in the present embodiment may be a fixed device, a movable device, or a floatable device. In addition, the size of the coverage of the relay station 30 in the present embodiment is not limited to a specific size. For example, a cell covered by the relay station 30 may be a macro cell, may be a micro cell, or may be a small cell.

The relay station 30 in the present embodiment is not limited to a mounted device if the relay function is satisfied. For example, the relay station 30 may be mounted on the terminal device 40 such as a smartphone, may be mounted on an automobile, a train, or a human-powered vehicle, may be mounted on a balloon, an airplane, or a drone, may be mounted on a traffic light, a sign, a street light, or the like, or may be mounted on a home appliance such as a television, a game machine, an air conditioner, a refrigerator, or a lighting fixture.

Besides, the configuration of the relay station 30 may be similar to the configuration of the base station 20 explained above. For example, like the base station 20 explained above, the relay station 30 may be a device installed in a mobile body or may be the mobile body itself. As explained above, the mobile body may be a mobile terminal such as a smartphone or a cellular phone. The mobile body may be a mobile body that moves on the land (on the ground in a narrow sense) or may be a mobile body that moves underground. Naturally, the mobile body may be a mobile body that moves on water or may be a mobile body that moves underwater. The mobile body may be a mobile body that moves inside the atmosphere or may be a mobile body that moves outside the atmosphere. The relay station 30 may be a ground station device or may be a non-ground station device. At this time, the relay station 30 may be an aircraft station or a satellite station.

The size of the coverage of the relay station 30 may be a large size such as the size of a macro cell or a small size such as the size of a pico cell like the size of the coverage of the base station 20. Naturally, the size of the coverage of the relay station 30 may be an extremely small size such as the size of a femtocell. The relay station 30 may have a beamforming capability. In this case, for the relay station 30, a cell or a service area may be formed for each beam.

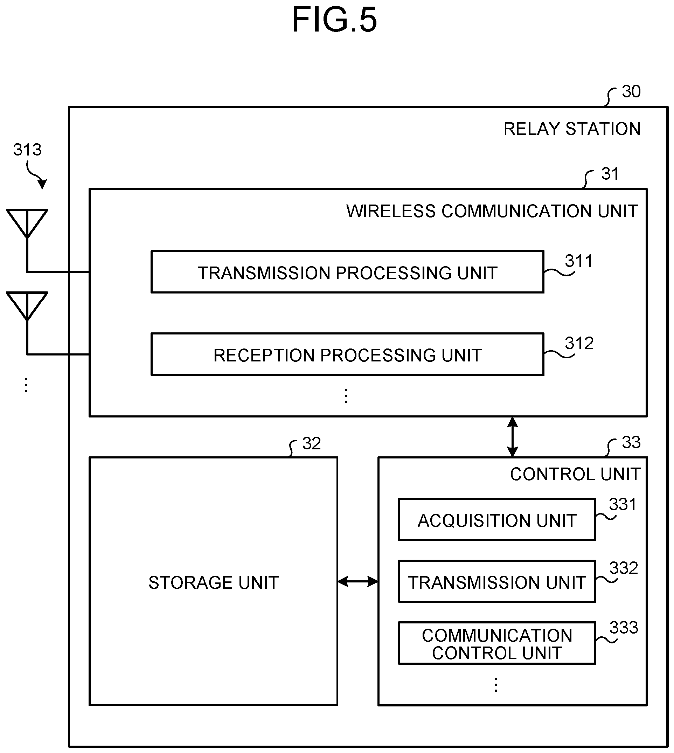

FIG. 5 is a diagram illustrating a configuration example of the relay station 30 according to the embodiment of the present disclosure. The relay station 30 includes a wireless communication unit 31, a storage unit 32, and a control unit 33. Note that the configuration illustrated in FIG. 5 is a functional configuration. A hardware configuration may be different from this configuration. The functions of the relay station 30 may be implemented in a distributed manner in a plurality of physically separated components.

The wireless communication unit 31 is a wireless communication interface that wirelessly communicates with other wireless communication devices (for example, the base station 20, the terminal device 40, and other relay stations 30). The wireless communication unit 31 is adapted to one or a plurality of wireless access schemes. For example, the wireless communication unit 31 is adapted to both of the NR and the LTE. The wireless communication unit 31 may be adapted to W-CDMA or cdma2000 in addition to the NR or the LTE. The wireless communication unit 31 includes a transmission processing unit 311, a reception processing unit 312, and an antenna 313. The wireless communication unit 31 may include a plurality of transmission processing units 311, a plurality of reception processing units 312, and a plurality of antennas 313. Note that, when the wireless communication unit 31 is adapted to a plurality of wireless access schemes, the units of the wireless communication unit 31 can be configured individually for each of the wireless access schemes. For example, the transmission processing unit 311 and the reception processing unit 312 may be individually configured by the LTE and the NR. The configurations of the transmission processing unit 311, the reception processing unit 312, and the antenna 313 are similar to the configurations of the transmission processing unit 211, the reception processing unit 212, and the antenna 213 explained above. Note that the wireless communication unit 31 may be configured to be capable of performing beamforming like the wireless communication unit 21.

The storage unit 32 is a storage device capable of reading and writing data such as a DRAM, an SRAM, a flash memory, or a hard disk. The storage unit 32 functions as storage means of the relay station 30.

The control unit 33 is a controller that controls the units of the relay station 30. The control unit 33 is implemented by a processor such as a CPU, an MPU, or a GPU. For example, the control unit 33 is implemented by the processor executing various programs stored in a storage device inside the relay station 30 using a RAM or the like as a work area. Note that the control unit 33 may be implemented by an integrated circuit such as an ASIC or an FPGA. All of the CPU, the MPU, the GPU, the ASIC, and the FPGA can be regarded as the controller. An operation of the control unit 33 may be the same as the operation of the control unit 23 of the base station 20.

As illustrated in FIG. 5, the control unit 33 includes an acquisition unit 331, a transmission unit 332, and a communication control unit 333. Blocks (the acquisition unit 331 to the communication control unit 333) configuring the control unit 33 are respectively functional blocks indicating functions of the control unit 33. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. A configuration method for the functional blocks is optional. Note that the control unit 33 may be configured by functional units different from the functional blocks explained above. Operations of the control unit 33 may be the same as the operations of the blocks of the control unit 23 of the base station 20.

Note that the relay station 30 may be an IAB relay node. The relay station 30 operates as an IAB-MT (Mobile Termination) for an IAB donor node for providing backhaul and operates as an IAB-DU (Distributed Unit) for a terminal device 40 for providing access. The IAB donor node may be, for example, the base station 20 and operates as an IAB-CU (Central Unit).

<2.4. Configuration of the terminal device>

The terminal device 40 is a wireless communication device that wirelessly communicates with other communication devices such as the base station 20 and the relay station 30. The terminal device 40 is, for example, a mobile phone, a smart device (a smartphone or a tablet), a PDA (Personal Digital Assistant), or a personal computer. The terminal device 40 may be equipment such as a camera for business use including a communication function or may be a motorcycle, a mobile relay vehicle, or the like on which communication equipment such as an FPU (Field Pickup Unit) is loaded. The terminal device 40 may be an M2M (Machine to Machine) device or an IoT (Internet of Things) device.

Note that the terminal device 40 may be capable of performing NOMA communication with the base station 20. The terminal device 40 may be capable of using an automatic retransmission technology such as HARQ when communicating with the base station 20. The terminal device 40 may be capable of performing the sidelink communication with another terminal device 40. The terminal device 40 may also be capable of using the automatic retransmission technology such as HARQ when performing the sidelink communication. Note that the terminal device 40 may also be capable of performing NOMA communication in communication (sidelink) with the other terminal devices 40. The terminal device 40 may be capable of performing LPWA communication with other communication devices (for example, the base station 20 and the other terminal devices 40). The wireless communication used by the terminal device 40 may be wireless communication using millimeter waves. Note that the wireless communication (including the sidelink communication) used by the terminal device 40 may be wireless communication using radio waves or may be wireless communication (optical wireless) using infrared rays or visible light.

The terminal device 40 may be a mobile body device. The mobile body device is a movable wireless communication device. At this time, the terminal device 40 may be a wireless communication device installed in a mobile body or may be the mobile body itself. For example, the terminal device 40 may be a vehicle that moves on a road such as an automobile, a bus, a truck, or a motorcycle, a vehicle that moves on a rail installed on a track of a train or the like, or a wireless communication device loaded on the vehicle. Note that the mobile body may be a mobile terminal or may be a mobile body that moves on the land (on the ground in a narrow sense), underground, on water, or underwater. The mobile body may be a mobile body that moves inside the atmosphere such as a drone or a helicopter or may be a mobile body that moves outside the atmosphere such as an artificial satellite.

The terminal device 40 may be simultaneously connected to a plurality of base stations 20 or a plurality of cells to carry out communication. For example, when one base station 20 supports a communication area via a plurality of cells (for example, pCell, sCell), the plurality of cells can be bundled to enable the base station 20 and the terminal device 40 to communicate with a carrier aggregation (CA) technology, a dual connectivity (DC) technology, or a multi-connectivity (MC) technology. Alternatively, the terminal device 40 and the plurality of base stations 20 are capable of communicating via cells of different base stations 20 with a coordinated multi-point transmission and reception (CoMP) technology.

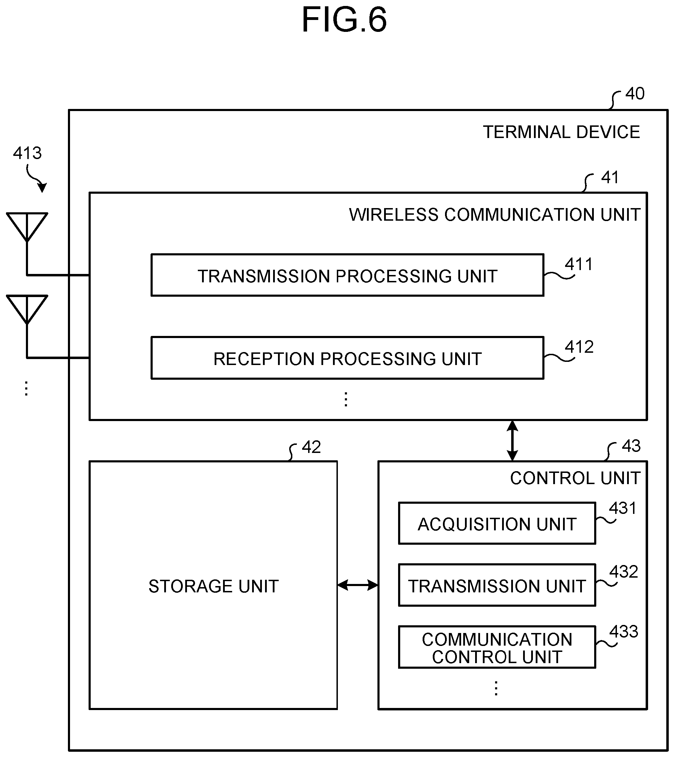

FIG. 6 is a diagram illustrating a configuration example of the terminal device 40 according to the embodiment of the present disclosure. The terminal device 40 includes a wireless communication unit 41, a storage unit 42, and a control unit 43. Note that the component illustrated in FIG. 6 is a functional configuration. A hardware configuration may be different from this configuration. The functions of the terminal device 40 may be distributed and implemented in a plurality of physically separated components.

The wireless communication unit 41 is a signal processing unit for wirelessly communicating with other wireless communication devices (for example, the base station 20, the relay station 30, and the other terminal devices 40). The wireless communication unit 41 operates according to control of the control unit 43. The wireless communication unit 41 includes a transmission processing unit 411, a reception processing unit 412, and an antenna 413. The configurations of the wireless communication unit 41, the transmission processing unit 411, the reception processing unit 412, and the antenna 413 may be the same as those of the wireless communication unit 21, the transmission processing unit 211, the reception processing unit 212, and the antenna 213 of the base station 20. The wireless communication unit 41 may be configured to be capable of performing beamforming like the wireless communication unit 21. Further, like the wireless communication unit 21, the wireless communication unit 41 may be configured to be capable of transmitting and receiving spatially multiplexed signals.

The storage unit 42 is a data readable/writable storage device such as a DRAM, an SRAM, a flash memory, or a hard disk. The storage unit 42 functions as storage means of the terminal device 40.

The control unit 43 is a controller that controls the units of the terminal device 40. The control unit 43 is implemented by a processor such as a CPU or an MPU. For example, the control unit 43 is implemented by the processor executing various programs stored in a storage device inside the terminal device 40 using a RAM or the like as a work area. Note that the control unit 43 may be implemented by an integrated circuit such as an ASIC or an FPGA. All of the CPU, the MPU, the ASIC, and the FPGA can be regarded as a controller. The control unit 43 may be implemented by a GPU in addition to or instead of the CPU.

As illustrated in FIG. 6, the control unit 43 includes an acquisition unit 431, a transmission unit 432, and a communication control unit 433. Blocks (the acquisition unit 431 to the communication control unit 433) configuring the control unit 43 are respectively functional blocks indicating functions of the control unit 43. These functional blocks may be software blocks or may be hardware blocks. For example, each of the functional blocks explained above may be one software module implemented by software (including a microprogram) or may be one circuit block on a semiconductor chip (a die). Naturally, each of the functional blocks may be one processor or one integrated circuit. Note that the control unit 43 may be configured in functional units different from the functional blocks explained above. A configuration method for the functional blocks is optional. Operations of the control unit 43 may be the same as the operations of the blocks of the control unit 23 of the base station 20.

<<3. Basic operation of communication system>>

The configuration of the communication system 1 is explained above. A basic operation of the communication system 1 is explained before the operation of the communication system 1 in the present embodiment is explained in detail.

(Radio frame configuration)

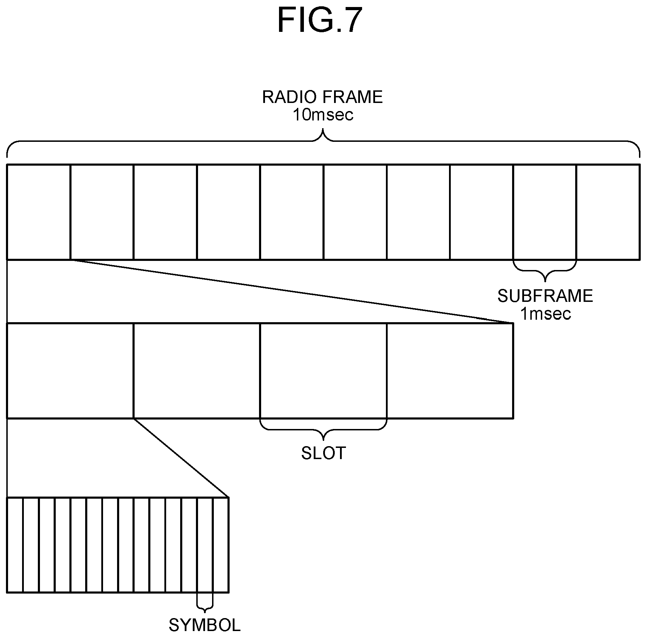

Subsequently, as a configuration example of a radio frame, a frame configuration example of NR is explained. FIG. 7 is a diagram illustrating an example of the frame configuration of NR.

A radio frame (radio frame) configured by 10 ms includes two half frames (not illustrated). A time interval of the half frames is 5 ms. Each of the half frames includes five subframes.

Further, one subframe is configured by one or more slots. One slot is configured by fourteen symbols in the case of a normal CP and is configured by twelve symbols in the case of an extended CP.

A radio resource in the present embodiment is configured by one or more resource elements (REs). The resource element is defined by one symbol and one subcarrier.

A resource block is defined by twelve consecutive subcarriers on a frequency. A physical resource block (PRB) is defined as a resource block within a BWP (BandWidth Part). A virtual resource block (VRB) is used for mapping between an output complex-value signal and a physical resource block.

(Subcarrier spacing)

In the NR, SCS (Subcarrier Spacing) of OFDM can be changed. In the TS 38.211, a table 4.2-1 illustrating a correspondence table of a parameter μ indicating an OFDM numerology, an SCS, and a cyclic prefix is defined. Table 1 is a table illustrating the correspondence table. The SCS is set at $2^\mu/15$ kHz. The NR up to Rel-16 supports the SCS up to 120 kHz for data transmission and up to 240 kHz for SS/PBCH blocks.

(Table 1)Supported transmission numerologies.

| μ | $\Delta f = 2^\mu \cdot 15$[kHz] | Cyclic prefix |
|---|---|---|
| 0 | 15 | Normal |
| 1 | 30 | Normal |
| 2 | 60 | Normal,Extended |
| 3 | 120 | Normal |
| 4 | 240 | Normal |

(Slot)

In the NR, a slot length and a symbol length decrease as the OFDM numerology increases. In TS38.211, a correspondence table of the parameter μ indicating the OFDM numerology, the number of symbols per slot, the number of slots per radio frame, and the number of slots per subframe is defined in Table 4.3.2-1. Table 2 is a table illustrating the correspondence table. While the number of symbols per slot is a fixed fourteen symbols regardless of μ, the number of slots per radio frame and the number of slots per subframe change according to μ.

(Table 2)Number of OFDM symbols per slot, slots per frame, and slots per subframe for normal cyclic prefix.

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

<Frequency range>

In the NR, a predetermined frequency is defined as a frequency range (FR). A frequency of 0.41 GHz or more and 7.125 GHz or less is defined as a Frequency Range 1(FR1, a first frequency range).
A frequency of 24.25 GHz or more and 71 GHz or less is defined as a Frequency Range 2(FR2, a second frequency range). In the FR2, a frequency of 24.25 GHz or more and 52.6 GHz or less is defined as a Frequency Range 2-1 (FR2-1) and a frequency of 52.6 GHz or more and 71 GHz or less is defined as a Frequency Range 2-2 (FR2-2).

<3.1. Sidelink communication>

<3.1.1. Overview of sidelink communication>

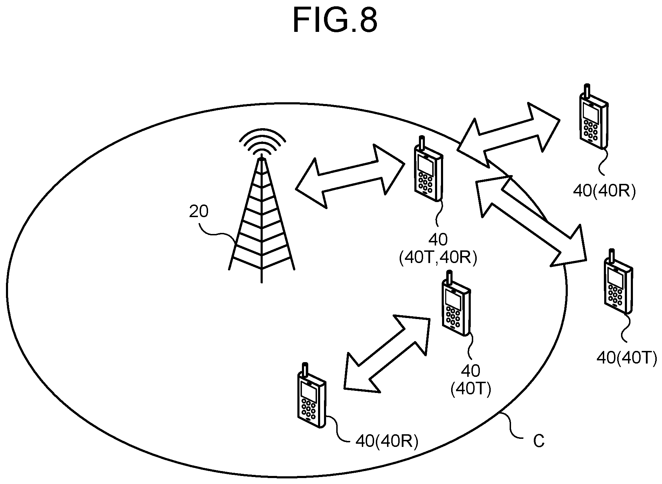

FIG. 8 is a diagram illustrating an overview of sidelink communication. Use cases of the sidelink communication are roughly divided into two. A first case is a case in which two or more terminal devices 40 are present on the inside of a cell C configured by the base station 20. A second case is a case in which at least one terminal device 40 of the two or more terminal devices 40 is present on the inside of the cell C and the other terminal device 40 is present on the outside of the cell C.
At this time, the terminal device 40 present on the inside of the cell C may perform communication with the base station 20 in addition to the sidelink communication. Accordingly, the terminal device 40 present on the inside of the cell C functions as the relay station 30 that relays the base station 20 and the terminal device 40 present outside the cell C.

Note that the presence of the terminal device 40 on the inside of the cell C means that the terminal device 40 is in a state in which the quality of a downlink signal received from the base station 20 is equal to or higher than a predetermined standard. In other words, the presence of the terminal device 40 on the outside of the cell C means that the terminal device 40 is in a state in which the quality of the downlink signal received from the base station 20 is equal to or lower than the predetermined standard.

The presence of the terminal device 40 on the inside of the cell C also means that the terminal device 40 is in a state in which a predetermined downlink channel received from the base station 20 can be decoded with a predetermined probability or more. In other words, the presence of the terminal device 40 on the outside of the cell C means that the terminal device 40 is in a state in which the predetermined downlink channel received from the base station 20 cannot be decoded with the predetermined probability or more.

In the following explanation, the terminal device 40 that receives information concerning sidelink communication from the base station 20 and transmits a sidelink control channel is sometimes referred to as a transmission device 40T and the other terminal devices 40 are sometimes referred to as reception devices 40R (first terminal device, second terminal device, and other terminal devices) (see, for example, FIG. 8).

<3.1.2. Details of the sidelink communication>

The sidelink communication is direct communication between the terminal device 40 and a terminal device 40 different from the terminal device 40. In the sidelink communication, a resource pool is set in the terminal device 40. The resource pool is a candidate of time and frequency resources used for transmission and reception of a sidelink. The terminal device 40 selects a resource for transmission and reception of the sidelink out of the resource pool and performs the sidelink communication. Since the sidelink communication is performed using an uplink resource (an uplink subframe or an uplink component carrier), the resource pool is also set in the uplink subframe or the uplink component carrier.

The sidelink physical channel includes a PSCCH (Physical Sidelink Control Channel), a PSSCH (Physical Sidelink Shared Channel), and a PSFCH (Physical Sidelink Feedback Channel).

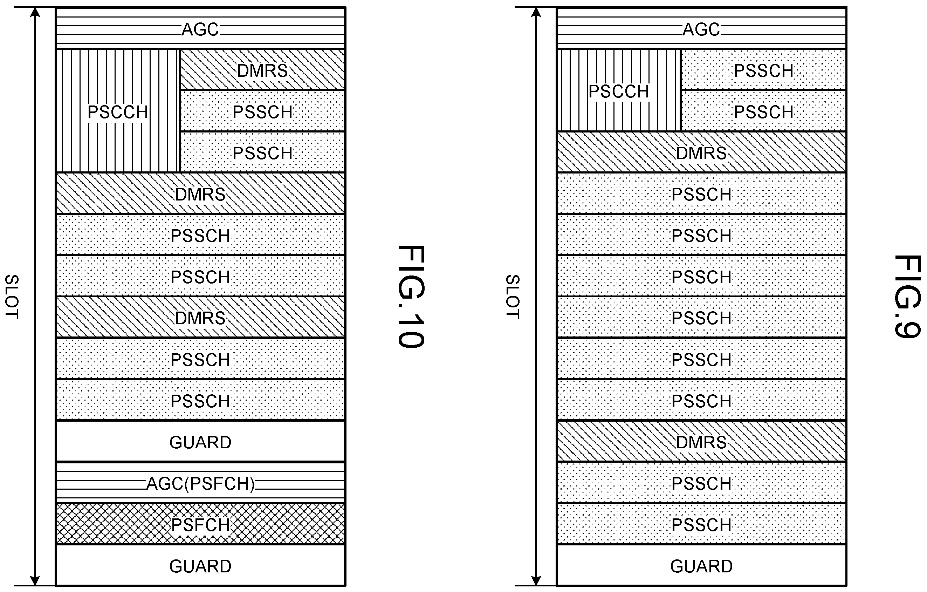

FIG. 9 and FIG. 10 are diagrams illustrating an example of a frame configuration of the sidelink. The configuration illustrated in FIG. 9 is a frame configuration of the sidelink in the case in which the PSCCH has a two-symbol configuration, the DMRS has a two-symbol allocation, and the PSFCH is absent. The configuration illustrated in FIG. 10 is a frame configuration of the sidelink in the case in which the PSCCH has a three-symbol configuration, the DMRS has a three-symbol allocation, and the PSFCH is present.

The PSCCH is used to transmit sidelink control information (SCI). The PSCCH is configured by two symbols or three symbols. Mapping of information bits of the sidelink control information is defined as an SCI format. The sidelink control information includes a sidelink grant. The sidelink grant is used for scheduling the PSSCH.

The PSSCH is used to transmit sidelink data (SL-SCH: Sidelink Shared Channel). The PSSCH may also be used to transmit control information of an upper layer.

The PSFCH is used to feed back a HARQ response (HARQ-ACK or ACK/NACK) for a decoding result of the PSSCH to the transmission device 40T.

A frame configuration of the sidelink includes an AGC symbol. The AGC symbol may be used for AGC (Automatic Gain Control) of the receive end device. The AGC symbol is arranged in a first symbol of transmission.

Specifically, the AGC symbol is arranged in the first symbol when a PSSCH is transmitted and is arranged in a twelfth symbol when a PSFCH is transmitted. The AGC symbol is generated by copying a second symbol of the transmission. That is, in the sidelink transmission, the first symbol and the second symbol of the transmission are the same.

The frame configuration of the sidelink includes a guard symbol. In the sidelink, transmission and reception are switched by a guard symbol (a guard time). The guard symbol is arranged in a fourteenth symbol. Further, in a slot in which the PSFCH is transmitted, the guard symbol is arranged in an eleventh symbol as well.

The resource pool is set in the terminal device 40 from the base station 20 by an SIB or a dedicated RRC message. Alternatively, the resource pool is set by information concerning the resource pool preset in the terminal device 40. The resource pool of time is indicated by period information, offset information, and subframe bitmap information. The frequency resource pool is indicated by a start position of a resource block, an end position of the resource block, and the number of consecutive resource blocks.

(Resource pool of the sidelink)

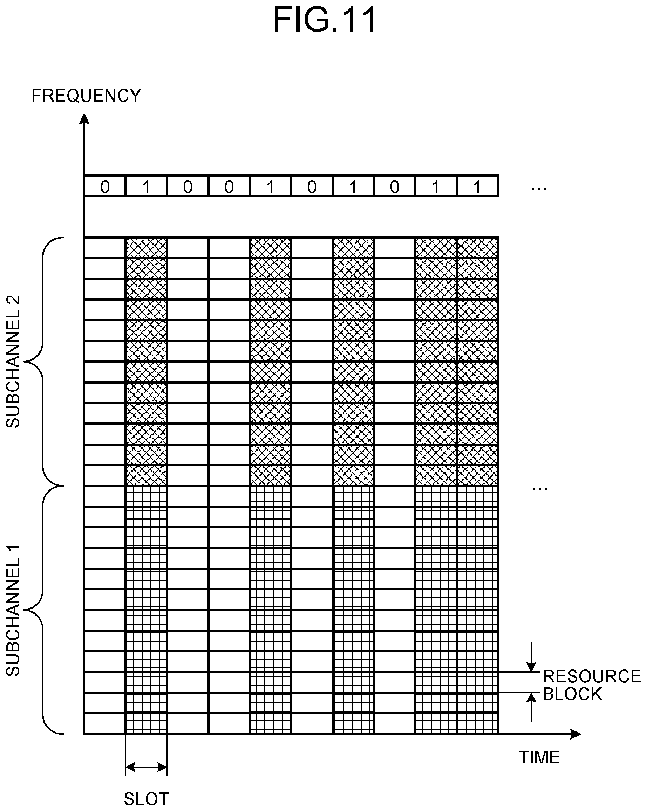

FIG. 11 is a diagram illustrating a resource pool of the sidelink. In the sidelink, a resource pool (a sidelink resource pool) is set as a resource used for transmission of a PSSCH and reception of a PSSCH. In the frequency axis, the resource pool includes one or a continuous plurality of subchannels. The subchannel includes one or a continuous plurality of PRBs (Physical Resource Blocks). The number of subchannels and the size of the subchannels are set by upper layer parameters.

The subchannel is used as a resource allocation unit of a frequency axis in the sidelink. Subchannel assignment of the sidelink transmission is determined by frequency resource assignment included in SCI. The subchannels are indexed in ascending order of frequencies.

Slots set as the resource pool are indicated by a bitmap. Bits of the bitmap corresponds to slots that can be set as the resource pool of the sidelink. For example, when a value of a bit indicates 1, a slot corresponding to the bit is set as a resource pool. When if the value of the bit indicates 0, the slot corresponding to the bit is not set as a resource pool. The length of the bitmap is set by an upper layer.

A slot including an S-SS (Sidelink-Synchronization Signal)/PSBCH (Physical Sidelink Broadcast Channel) block is not set as a resource pool. A slot that does not semi-statically include a predetermined number of uplink symbols is not set as a resource pool. A reserved slot is not set as a resource pool.

Note that the device that sets the resource pool may be a device other than the base station 20. Examples of the device other than the base station 20 include a representative terminal device 40 (a primary terminal device or a master terminal device).

(Sidelink resource allocation scheme)

As a scheme of resource allocation to the sidelink, there are a resource allocation mode 1 (Sidelink Resource allocation mode 1) and a resource allocation mode 2 (Sidelink Resource allocation mode 2).

The resource allocation mode 1 is a scheme in which the base station 20 allocates a resource for the terminal device 40 to transmit data on a sidelink physical channel (a PSCCH or a PSSCH).

The resource allocation mode 2 is a scheme in which the terminal device 40 itself performs sensing and selects a resource for the terminal device 40 to transmit data on the sidelink physical channel.

(1) Resource allocation mode 1

In the resource allocation mode 1, when a transmission packet is generated in the terminal device 40, the base station 20 selects, out of the resource pool, a resource to be used for transmission of the packet and allocates the resource.

In the resource allocation mode 1, a resource used for sidelink transmission is designated by a dynamic grant or RRC signaling transmitted from the base station 20. Specifically, in the resource allocation mode 1, a dynamic grant, a configured grant type 1, and a configured grant type 2 are supported for PSSCH transmission and PSCCH transmission.

In the sidelink dynamic grant, the PSSCH transmission is scheduled by a DCI format 3_0. In the sidelink configured grant type 1, a resource for the PSSCH transmission is allocated by the RRC signaling. In the sidelink configured grant type 2, the configured grant is activated by the DCI format 3_0. The PSSCH transmission is performed using the resource designated by the RRC signaling.

In the resource allocation mode 1, since resource allocation is performed by the base station 20 every time a transmission packet is generated, a contention frequency between sidelink communications can be reduced. On the other hand, a lot of signaling overhead between the base station 20 and the terminal device 40 is required.

(2) Resource allocation mode 2

In the resource allocation mode 2, a resource pool is allocated to the terminal device 40 in advance. Alternatively, in the resource allocation mode 2, the resource pool is allocated by the base station 20/a network.

In the resource allocation mode 2, the terminal device 40 can select a sidelink resource in a resource selection window and reserve a future sidelink resource based on a measurement result of an interference pattern in a sensing window and a reservation status of a sidelink resource in the sensing window. By using a result of the prediction, the terminal device 40 can select and reserve a sidelink resource usable for transmission of the packet, that is, a sidelink resource predicted not to be used for transmission of other packets.

In the resource allocation mode 2, while signaling overhead between the base station 20 and the terminal device 40 is small, packet contention may occur.

In the resource allocation mode 2, resource allocation modes are classified into the following four types.

· Resource allocation mode 2(a)
· Resource allocation mode 2(b)
· Resource allocation mode 2(c)
· Resource allocation mode 2(d)

The resource allocation mode 2(a) is a mode in which the terminal device 40 autonomously selects a transmission sidelink resource. The resource allocation mode 2(b) is a mode in which the terminal device 40 assists sidelink resource selection of another transmission terminal. The resource allocation mode 2(c) is a mode in which sidelink transmission is performed by the configured grant. The resource allocation mode 2(d) is a mode in which the terminal device schedules sidelink transmission of another terminal device 40.

In the following explanation, the four types of resource allocation modes are explained in detail.

[Resource allocation mode 2 (a)]

In the resource allocation mode 2 (a), when a packet is generated in the terminal device 40, the terminal device 40 autonomously selects, out of a resource pool, a sidelink resource to be used for transmission of the packet.

First, the terminal device 40 that transmits the packet performs sensing in order to discover, out of the resource pool, a sidelink resource used for the transmission of the packet. Subsequently, the terminal device 40 selects a sidelink resource out of the resource pool based on a result of the sensing.

Then, the terminal device 40 transmits the packet using the selected sidelink resource. At this time, the terminal device 40 reserves, according to necessity, a sidelink resource to be used for subsequent packet transmission.

The resource allocation mode 2(a) can be applied to both of a semi-persistent method in which a resource is selected for a plurality of sidelink transmissions with different transport blocks and a dynamic method in which a resource is selected every time for sidelink transmissions of transports.

[Resource allocation mode 2 (b)]

In the resource allocation mode 2(b), the terminal device 40 assists selection of a sidelink resource of another transmission terminal.

[Resource allocation mode 2 (c)]

In the resource allocation mode 2(c), a sidelink transmission pattern is set in the terminal device 40. The terminal device 40 selects, according to the set sidelink transmission pattern, a sidelink resource to be used for transmission.

The sidelink transmission pattern is defined by the sizes, the positions, and the number of resources of time and frequency.

A plurality of sidelink transmission patterns can be set. When only one sidelink transmission pattern is set, the terminal device 40 does not perform sensing. On the other hand, when a plurality of sidelink transmission patterns are set, the terminal device 40 performs sensing and selects a sidelink transmission pattern based on a sensing result.

In out-of-coverage operation, one or a plurality of sidelink transmission patterns defined in respective sidelink resource pools are set in advance. In in-coverage operation, one or a plurality of sidelink transmission patterns defined in respective sidelink resource pools are set from the base station 20.

[Resource allocation mode 2 (d)]

The resource allocation mode 2(d) is applied in group-based sidelink communication including three or more terminal devices 40.

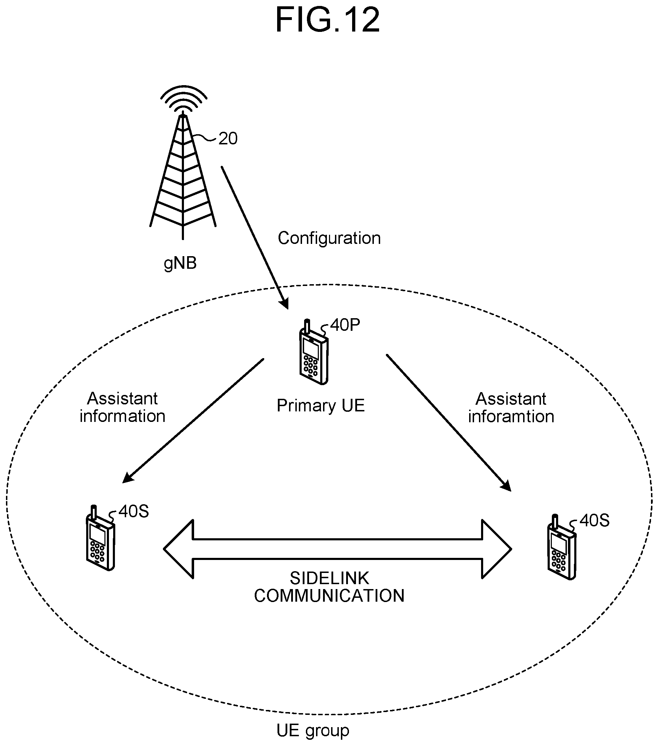

FIG. 12 is a diagram for explaining the resource allocation mode 2(d). In a group, a representative terminal device 40P (a master terminal device or a primary terminal device) is defined.

The representative terminal device 40P reports information concerning other terminal devices 40S (slave terminal devices, secondary terminal devices, and member terminal devices) in the group to the base station 20. The base station 20 provides resource pool setting and resource setting of the terminal devices 40S in the group via the representative terminal device 40P.

In the resource allocation mode 2(d), since the member terminal devices 40S do not need to be directly connected to the base station 20, a signal overhead of a Uu link (a communication link between the base station 20 and the terminal devices 40) can be reduced.

The terminal device 40 that can be the representative terminal device 40P and functions that can be provided are determined depending on the capabilities of the terminal devices 40. The representative terminal device 40P can provide predetermined assist information to the member terminal devices 40S. Examples of the assist information include resource pool setting, information concerning contention, COT sharing information, CSI, and information concerning a degree of congestion.

(Sensing in the sidelink)

In the resource allocation mode 2, a sensing procedure is supported. SCI decoding from another terminal device 40 and/or measurement of a sidelink resource is used as sensing in the sidelink.

In the sensing by the SCI decoding, the terminal device 40 acquires information concerning the sidelink resource to be used included in SCI transmitted from the other terminal device 40. Based on the information of the SCI, the terminal device 40 determines a sidelink resource to be used for transmission while avoiding a resource that the other terminal device 40 plans to use.

In the sensing by the measurement of the sidelink resource, the terminal device 40 performs L1 (Layer 1) sidelink RSRP (Reference Signal Received Power) measurement based on sidelink DMRS (Demodulation RS). When measured RSRP is higher than a predetermined threshold, the terminal device 40 recognizes that the measured sidelink resource is used for transmission by the other terminal device 40 and determines a sidelink resource to be used for transmission while avoiding the sidelink resource.

As explained above, the terminal device 40 selects or reselects a sidelink resource based on a result of the sensing procedure explained above.

<3.2. Multi-slot scheduling>

The sidelink communication is explained above. Subsequently, multi-slot scheduling is explained.

In normal dynamic scheduling, one PDSCH or one PUSCH is scheduled by one PDCCH. Note that this normal dynamic scheduling is also called single-slot scheduling.

On the other hand, in the NR, a plurality of PDSCHs or a plurality of PUSCHs can be scheduled by one PDCCH. This scheduling method is called multi-slot scheduling.

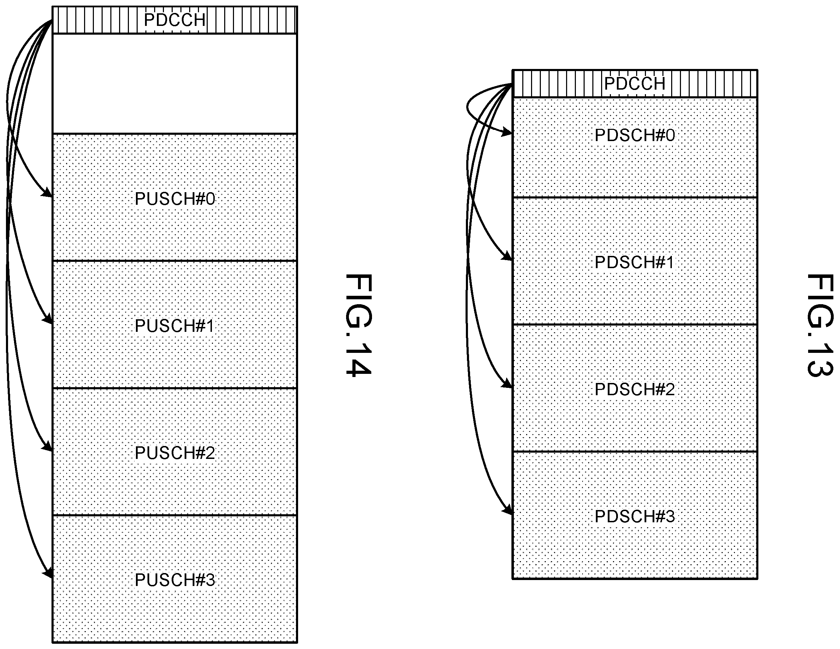

FIG. 13 is a diagram illustrating an example of the multi-slot scheduling of the PDSCH. In the example illustrated in FIG. 13, one PDCCH schedules four PDSCHs over four consecutive slots.

FIG. 14 is a diagram illustrating an example of multi-slot scheduling of the PUSCH. In the example illustrated in FIG. 14, one PDCCH schedules four PUSCHs from the next slot over four consecutive slots.

In the multi-slot scheduling, transport blocks of PDSCHs or PUSCHs are different. That is, the PDSCHs or the PUSCHs can transmit different data.

When the multi-slot scheduling is set, the number of slots to be scheduled can be designated by information concerning TDRA (Time Domain Resource Allocation) included in a DCI of one PDCCH. The value indicated by the information concerning the TDRA is set by RRC signaling.

In the multi-slot scheduling, a HARQ process number included in the DCI indicates a head PDSCH or PUSCH of the multi-slot scheduling.

In the multi-slot scheduling, a HARQ process number of a PDSCH or a PUSCH scheduled in a rear slot is a value obtained by adding an indicated HARQ process number and a slot offset from a head. Note that modulo operation is performed with the number of HARQ processes such that the HARQ process number does not exceed an upper limit value (e.g. sixteen) of the number of HARQ processes.

An NDI and an RV included in the DCI are indicated individually for a slot. On the other hand, in other fields included in the DCI, a common value is applied among a plurality of slots to be scheduled.

An advantage of the multi-slot scheduling is that, since a plurality of PDSCHs or a plurality of PUSCHs can be scheduled by one PDCCH, the multi-slot scheduling contributes to a reduction of an overhead of control information.

Since a monitoring frequency of the PDCCH can be reduced, the multi-slot scheduling also contributes to a reduction in power consumption of the terminal device 40. Further, since a transmission gap for transmitting the PDCCH can be reduced in the unlicensed band, it is possible to reduce interruption by other wireless devices.

<3.3. Use of the unlicensed band>

The multi-slot scheduling is explained above. Subsequently, use of the unlicensed band is explained.

(Channel access of an unlicensed channel)

To use an unlicensed channel, a wireless device (for example, the base station 20 or the terminal device 40) needs to perform channel access (channel access, medium access, or listen before talk) before transmitting a signal. Note that the unlicensed channel is a unit of a frequency band in which the channel access is performed. The channel can be expressed as a carrier, a frequency carrier, a component carrier, a cell, a frequency band, an LBT band, or the like.

In the channel access, the wireless device performs power measurement (referred to as carrier sense, sensing, or CCA (Clear Channel Assessment) as well) of the channel and compares a measured power value of the channel and a power detection threshold (an Energy detection Threshold).

When the measured power value of the channel is lower than the power detection threshold, the channel is determined as clear. When the measured power value of the channel is higher than the power detection threshold, the channel is determined as busy.

When the channel is determined as clear in all sensing slots, the wireless device can acquire a transmission right for the channel and transmit a signal. The transmission right of the channel can also be referred to as TxOP, transmission opportunity, COT, or a channel occupancy time.

In the following explanation, the acquisition of the transmission right of the channel is sometimes referred to as acquisition of the channel.

The acquired channel may be utilized for transmission of other wireless devices. In this case, a grant (grant) is sent from the wireless device that has acquired the channel to the other wireless device.

The wireless device that acquires the channel is sometimes referred to as an initiating device. A wireless device that uses a channel acquired by another wireless device is sometimes referred to as responding device.

In 3GPP (registered trademark), four kinds of LBT categories were defined. In the channel access, LBT corresponding to any one of the following LBT categories is performed.

· LBT category 1 (Cat 1 LBT)
· LBT category 2 (Cat 2 LBT)
· LBT category 3 (Cat 3 LBT)
· LBT category 4 (Cat 4 LBT)

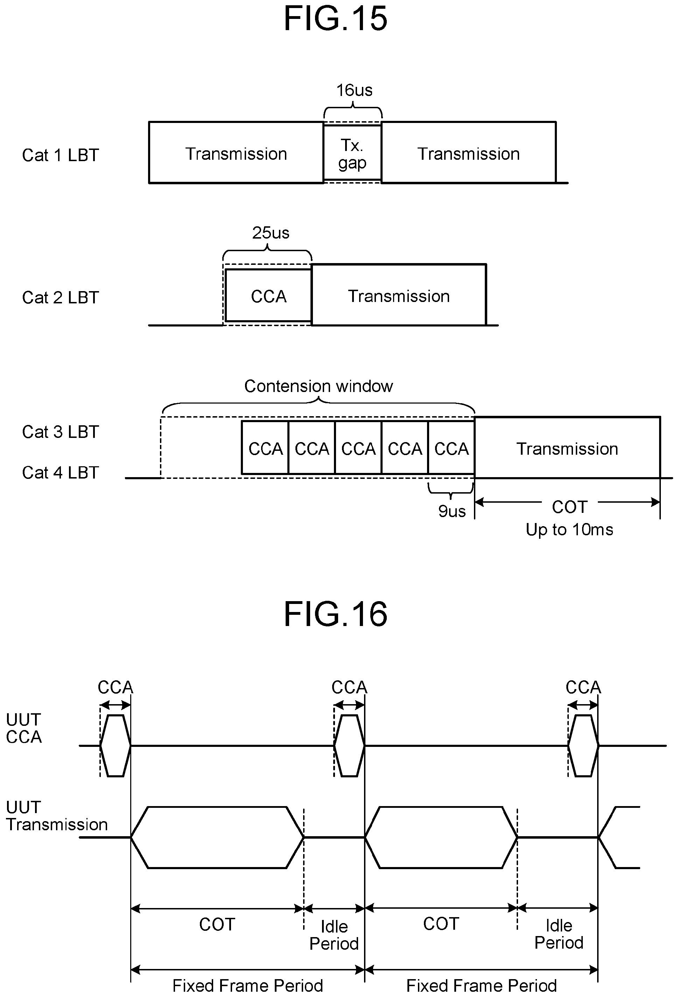

FIG. 15 is a diagram for describing four types of LBT categories. The LBT category 1 (Cat 1 LBT) is a category without LBT. In the LBT category 1, a gap is provided between transmission and transmission. The LBT category 2 (Cat 2 LBT) is a category in which random back-off is not performed. The LBT category 3 (Cat 3 LBT) is a category in which random back-off by a contention window having a fixed size is performed. The LBT category 4 (Cat 4 LBT) is a category in which random back-off by a contention window having a variable size is performed.

(Channel access procedure of the unlicensed channel)

A channel access procedure is performed to access an unlicensed channel transmitted by the base station 20 or the terminal device 40. The channel access can also be referred to as medium access or LBT (Listen before Talk).

In a channel access procedure of load-based equipment (LBE), sensing of a channel is performed once or a plurality of times. Based on a result of the sensing, it is determined whether the channel is idle (referred to as unoccupied, available, or enable as well) or busy (referred to as occupied, unavailable, or disable as well) (vacancy determination). In the sensing of the channel, electric power of the channel in a predetermined waiting time is sensed.

The "channel access/channel access procedure of the load-based device" explained above can also be referred to as a channel access procedure in dynamic channel access and dynamic channel occupancy.

Examples of a waiting time of the channel access procedure include a first waiting time (a slot), a second waiting time, a third waiting time (a defer period), and a fourth waiting time.

The slot is a unit of a waiting time of the base station 20 and the terminal device 40 in the channel access procedure. The slot is defined by, for example, 9 microseconds.

In the second waiting time, one slot is inserted at the head. The second waiting time is defined by, for example, 16 microseconds.

A defer period includes the second waiting time and a continuous plurality of slots following the second waiting time. The number of the continuous plurality of slots following the second waiting time is determined based on a priority class (a channel access priority class) used to satisfy QoS.

The fourth waiting time includes the second waiting time and one slot following the second waiting time. The fourth waiting time is defined by, for example, 25 microseconds.

The base station 20 or the terminal device 40 senses a predetermined channel during a period of a predetermined slot. When electric power detected by the base station 20 or the terminal device 40 for at least 4 microseconds within the predetermined slot period is smaller than a predetermined power detection threshold, the predetermined slot is regarded as idle. On the other hand, when the electric power is larger than the predetermined power detection threshold, the predetermined slot is regarded as busy.

The channel access procedure includes a first channel access procedure, a second channel access procedure, and a third channel access procedure. The first channel access procedure is performed using a plurality of slots and a defer period. The second channel access procedure is performed using one second waiting time or fourth waiting time. The third channel access procedure is performed using the second waiting time.

Parameters concerning the channel access are determined based on a priority class. Examples of the parameters concerning the channel access include a minimum contention window, a maximum contention window, a maximum channel occupancy time, and a value that a contention window can take. The priority class is determined by a value of a QCI (QoS class identifier) or a 5QI (5G QoS Identifier) that processes QoS (Quality of Service).

Table 3 is an example of a correspondence table of parameters related to priority classes and channel access. Table 4 is an example of mapping between the priority class and the QCI. Table 5 is an example of mapping of the priority class and the 5QI.

(Table 3)Example of a correspondence table between a priority class and parameters concerning channel access

| Channel access priority class (p) | $m_p$ | Minimum contention window $CW_{min, p}$ | Maximum contention window $CW_{max, p}$ | Maximum channel occupancy time $T_{m cot,p}$ | Value that a contention window $CW_p$ can take |
|---|---|---|---|---|---|
| 1 | 1 | 3 | 7 | 2ms | {3,7} |
| 2 | 1 | 7 | 15 | 3ms | {7,15} |
| 3 | 3 | 15 | 63 | 8 or 10ms | {15,31,63} |
| 4 | 7 | 15 | 1023 | 8 or 10ms | {15,31,63,127, 255,511,1023} |

(Table 4)Example of mapping of a priority class and QCI

| Channel access priority class (p) | QCI |
|---|---|
| 1 | 1, 3, 5, 65, 66, 69, 70 |
| 2 | 2, 7 |
| 3 | 4, 6, 8, 9 |
| 4 | Other than the above |

(Table 5)Example of mapping of a priority class and 5QI

| Channel access priority class (p) | 5QI |
|---|---|
| 1 | 1, 3, 5, 65, 66, 67, 69, 70, 79, 80, 82, 83 |
| 2 | 2, 7, 71 |
| 3 | 4, 6, 8, 9, 72, 73, 74, 76 |
| 4 | - |

<Details of the first channel access procedure>

The first channel access procedure (a type 1 channel access procedure) is classified into an LBT category 3 or an LBT category 4. In the first channel access procedure, a procedure described below is performed.

Step (0):

Sensing of a channel is performed a defer period. If the channel is idle in a slot in the defer period, the communication device advances the processing to step (1). Otherwise, the communication device advances the processing to step (6).

Step (1):

The communication device acquires an initial value of a counter. A value that the initial value of the counter can take is an integer from 0 to a contention window CW. The initial value of the counter is determined at random according to a uniform distribution. The communication device sets the initial value of the counter in a counter N and advances the processing to step (2).

Step (2):

When the counter N is larger than 0 and subtraction of the counter N is selected, the communication device subtracts 1 from the counter N. Thereafter, the communication device advances the processing to step (3).

Step (3):

The communication device adds a period of a slot and stays on standby. In the additional slot, the communication device executes channel sense. When the additional slot is idle, the communication device advances the processing to step (4). Otherwise, the communication device advances the processing to step (5).

Step (4):

When the counter N is 0, the communication device stops this procedure. Otherwise, the communication device advances the processing to step (2).

Step (5):

The communication device adds a defer period and stays on standby. The communication device executes channel sense until it is detected that any one slot included in the additional defer period is busy or it can be detected that all slots included in the additional defer period are idle. Thereafter, the communication device advances the processing to step (6).

Step (6):

When it is sensed that the channel is idle in all of the slots included in the additional defer period, the communication device returns the processing to step (4). Otherwise, the communication device returns the processing to step (5).

After stopping step (4), the communication device executes transmission including data such as a PDSCH and a PUSCH in the channel.

After step (4) is stopped, transmission may not be performed in the channel. In this case, thereafter, when the channel is idle in all of the slot and the defer period immediately before transmission, the communication device may perform transmission without executing the procedure explained above. On the other hand, when the channel is not idle in either the slot or the defer period, the communication device returns the processing to step (1) after it is sensed that the channel is idle in all of slots in the additional defer period.

(Details of the second channel access procedure)

The second channel access procedure (a type 2 channel access procedure) is classified into the LBT category 2. In the second channel access procedure, transmission may be performed immediately after the channel is regarded as idle as a result of sensing for at least the second waiting time or the fourth waiting time. On the other hand, transmission is not performed when the channel is regarded as not idle as a result of sensing for at least the second waiting time or the fourth waiting time. The second channel access procedure is applied when a transmission interval is 16 microseconds or 25 microseconds.

The second channel access procedure in which the fourth waiting time is used is referred to as type 2A channel access procedure. The second channel access procedure in which the second waiting time is used is referred to as type 2B channel access procedure.

(Details of the third channel access procedure)

The third channel access procedure (a type 2C channel access procedure) is classified into the LBT category 1. In the third channel access procedure, the channel is not sensed before transmission. The third channel access procedure is applied when the transmission interval is 16 microseconds or less.

(Collision window adaptation procedure)

In the LBT category 4, a contention window adaptation procedure is performed.

A contention window CW used in the first channel access procedure is determined based on a contention window adaptation procedure. A value of the contention window CW is retained for each priority class. The contention window CW takes a value between a minimum contention window and a maximum contention window. The minimum contention window and the maximum contention window are determined based on the priority class.

The adjustment of the value of the contention window CW is performed before step (1) of the first channel access procedure. When a ratio of NACKS is higher than a threshold in HARQ responses corresponding to a shared channel of a reference HARQ process in at least a reference subframe (a reference slot or a reference section) of the contention window adaptive procedure, the value of the contention window CW is increased. Otherwise, the value of the contention window CW is set to the value of the minimum contention window. For example, 90% is set as the threshold. The value of the contention window CW is increased, for example, based on a formula $CW=2*(CW+1)-1$.

The reference section is defined as a section from the beginning of an occupied channel to the end of a first slot including the at least one unicast PDSCH or the end of a first transmission burst including at least one unicast PDSCH.

(Details of a channel access procedure in a downlink)

When performing downlink transmission including a PDSCH, a PDCCH, and/or an EPDCCH (Enhanced PDCCH) in an unlicensed channel, the base station 20 accesses the channel based on the first channel access procedure and performs the downlink transmission.

On the other hand, when performing downlink transmission including transmission of a DRS (Discovery RS) or a DS (Discovery Signal) or a Discovery Burst but not including a PDSCH in an unlicensed channel, the base station 20 accesses the channel based on the second channel access procedure and performs the downlink transmission. Note that a period of the downlink transmission is preferably shorter than 1 millisecond.

(Details of the channel access procedure in the uplink)

In an unlicensed channel, when it is instructed to perform the first channel access procedure with an uplink grant for scheduling a PUSCH, the terminal device 40 performs the first channel access procedure before uplink transmission including the PUSCH.

When it is instructed to perform the second channel access procedure with an uplink grant for scheduling a PUSCH, the terminal device 40 performs the second channel access procedure before uplink transmission including the PUSCH.

For uplink transmission not including a PUSCH but including an SRS, the terminal device 40 performs the second channel access procedure before the uplink transmission.

When the end of the uplink transmission indicated by the uplink grant is within an uplink duration (UL duration), the terminal device 40 performs the second channel access procedure before the uplink transmission irrespective of a procedure type indicated by the uplink grant.

When the uplink transmission continues with the fourth waiting time interposed after the end of the downlink transmission from the base station 20, the terminal device 40 performs the second channel access procedure before the uplink transmission.

(NR channel access procedure)

In a channel access procedure in an unlicensed channel using the NR, the communication device (a transmission station) can perform non-beam-formed channel sensing and beam-formed channel sensing.

The non-beam-formed channel sensing is channel sensing by reception in which directivity is not controlled or channel sensing having no direction information. The channel sensing not having direction information is, for example, channel sensing in which measurement results are averaged in all directions. The communication device may not recognize directivity (an angle and a direction) used in the channel sensing.

The beam-formed channel sensing is channel sensing by directivity controlled reception or channel sensing having direction information. That is, the beam-formed channel sensing is channel sensing in which a reception beam is directed in a predetermined direction. A communication device having a function of performing the beam-formed channel sensing can perform one or more times of channel sensing using different directivities.

By performing the beam-formed channel sensing, an area detected by sensing is narrowed. Accordingly, the communication device can reduce a frequency of detecting a communication link that does not cause interference and can reduce an exposed terminal problem.

(Channel access of the frame-based equipment (FBE))

In a channel access procedure of frame-based equipment (FBE), sensing of a channel is performed once before transmission. Based on a result of the sensing, it is determined whether the channel is idle (idle, unoccupied, available, or enable) or busy (busy, occupied, unavailable, or disable) (vacancy determination). In the sensing of the channel, electric power of the channel in a predetermined waiting time is sensed.

Note that the "channel access/channel access procedure of the frame-based equipment" explained above can also be referred to as semi-static channel access or channel access procedure in semi-static channel occupancy. The "channel access" explained above can also be referred to as LBT (Listen before Talk).

FIG. 16 is a diagram illustrating a frame-based configuration of the frame-based equipment. A transmission and/or reception configuration used for the frame-based equipment has periodic timing referred to as fixed frame period.

The fixed frame period is set in channel access of the frame-based equipment. The fixed frame period is set to 1 millisecond to 10 milliseconds. The fixed frame period can be changed once in 200 milliseconds.

In the channel access of the frame-based equipment, the equipment performs sensing of a channel immediately before starting transmission from the head of the fixed frame period. The equipment performs the sensing once using one slot consisting of 9 microseconds or less. As a result of the sensing the channel, when a power value is larger than a predetermined power detection threshold, the channel is considered to be busy. On the other hand, when the power value is smaller than the predetermined power detection threshold, the channel is clear and the equipment can perform the transmission. The equipment can perform transmission during a channel occupancy time (COT). The equipment can perform a plurality of transmissions without performing the sensing if it is within the channel occupancy time and a gap among the plurality of transmissions is 16 microseconds or less. On the other hand, when the gap among the plurality of transmissions exceeds 16 microseconds, the equipment needs to perform additional channel sensing. In the additional channel sensing, similarly, the sensing is performed once using one slot.

The channel occupancy time in the channel access of the frame-based equipment does not exceed 95% of the fixed frame period. An idle period in the channel access of the frame-based equipment is equal to or larger than 5% of the fixed frame period. The idle period is 100 microseconds or more.

Transmission of a response (ACK/NACK or HARQ-ACK) to the transmission from the equipment may be performed in the channel occupancy time.

(COT)

In an operation of the unlicensed band, a wireless communication device (hereinafter referred to as communication device) performs LBT before signal transmission. When it is determined as a result of the LBT that a channel is clear, the channel can be occupied for a predetermined time. The predetermined time during which the channel can be occupied after LBT is referred to as COT.

In the LBE, the COT is defined so as to fall within the maximum channel occupancy time (Maximum COT) defined in the foregoing Table 3. In the FBE, the COT is defined to fit in 95% of the fixed frame period.

The COT acquired by the communication device may be used for transmission of a reception-side communication device (hereinafter referred to as reception device). A communication device (a responding device) different from the communication device (an initiating device) that has acquired the COT transmitting a signal using the COT is referred to as COT sharing. When the COT is shared, the other communication devices also need to recognize the COT and a COT length.

The terminal device 40 is notified of the COT length of the COT acquired by the base station 20 (hereinafter referred to as base station start COT or base station acquisition COT) using the DCI format 2_0. The terminal device 40 recognizes the length of the base station start COT based on a COT length indicator included in the DCI format 2_0.

The terminal device 40 can implicitly recognize the COT from PDSCH scheduling received from the base station 20. The terminal device 40 can implicitly recognize the COT from a downlink physical signal (DMRS for SS/PBCH Block, CSI-RS, or PDCCH) received from the base station 20.

The base station 20 is notified of the COT length of the COT (hereinafter referred to as terminal device start COT or terminal device acquisition COT) acquired by the terminal device 40 using CG (Configured Grant)-UCI (Uplink Control Information). The base station 20 recognizes the length of the start COT of the terminal device 40 based on COT sharing information included in the CG-UCI.

<<4. Detailed operation of the communication system>>

The basic operation of the communication system 1 is explained above. Subsequently, an operation of the communication system 1 in the present embodiment is explained in detail. Here, first, a problem in the case in which the sidelink communication is performed in the unlicensed band is explained. Subsequently, an operation of the communication system 1 in the present embodiment for solving the problem is explained.

(Problem)

In the dynamic channel access in the unlicensed band explained above, the communication device is required to perform LBT and transmit a signal immediately after a COT is successfully acquired. On the other hand, in the NR, data transmission is started in a predetermined scheduling time unit (for example, a slot).

For that reason, when COT acquisition timing and slot start timing do not match, a reservation signal that is not data and only for occupying a channel is transmitted from the COT acquisition timing to a slot start position.

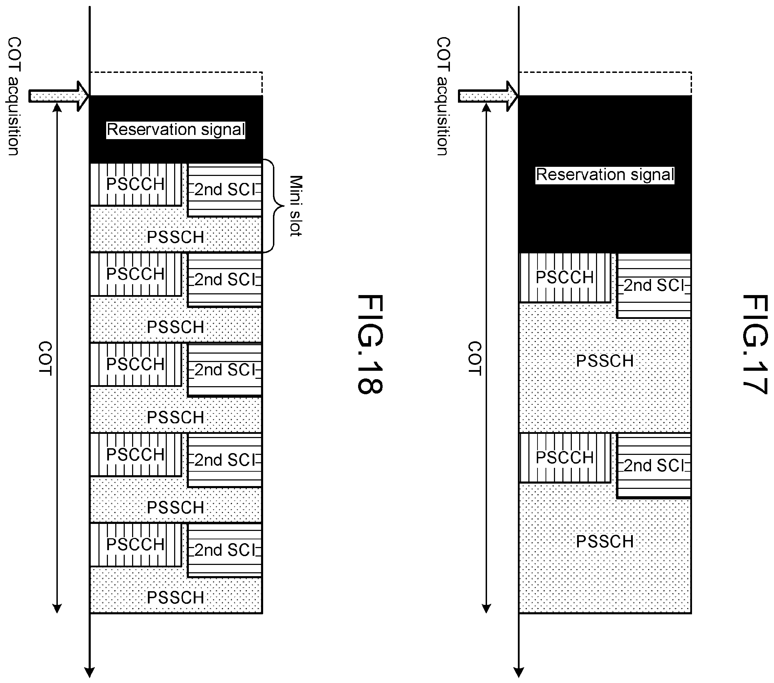

FIG. 17 is a diagram illustrating an example of reservation signal transmission in the sidelink. FIG. 17 illustrates an example in which the COT is successfully acquired immediately after a slot boundary.

In this case, the transmission device 40T transmits the reservation signal to the next slot boundary after the COT acquisition. However, when a section from the COT acquisition to the next slot boundary is long, a transmission section of the reservation signal is long and the frequency utilization efficiency is deteriorated.

As a method for solving this, it is conceivable to introduce a mini-slot having a shorter scheduling section than the slot into the sidelink. By introducing the mini-slot, a section to the scheduling boundary is reduced and a transmission section of the reservation signal can also be reduced.

FIG. 18 is a diagram illustrating an example of the mini-slot scheduling in the sidelink. In the example illustrated in FIG. 18, an example in which a mini-slot having a half length of the slot of the related art is introduced is illustrated.

By introducing the mini-slot, a part of the section transmitted as the reservation signal in FIG. 17 can also be used for data transmission. Therefore, the frequency utilization efficiency is improved.

The mini-slot scheduling has an effect of reducing a transmission section of a reservation signal but has the following problems.

(1) Increase in a control overhead

In the mini-slot scheduling, control information (first SCI and second SCI) is included for each mini-slot. The PSSCH carrying the data in the mini-slot is scheduled based on the control information.

Therefore, an overhead required for the control information increases as compared with the scheduling in units of slots. It is likely that communication quality is deteriorated or frequency utilization efficiency is deteriorated by this overhead increase.

(2)Increase in a monitoring/sensing frequency

In the mini-slot scheduling, a scheduling period is shorter than that in the slot. Therefore, the terminal device 40 needs to frequently blindly decode the control information (first SCI and second SCI) to check whether the control information is data addressed to the terminal device 40. When a monitoring frequency increases, since a processing load of the terminal device 40 increases, it is likely that power consumption of the terminal device 40 increases.

As explained above, in the unlicensed band, it is preferable that the terminal device 40 continuously transmits signals when a COT is acquired once. This is because, when a transmission gap is formed in the COT, it is likely that other transmission interrupts the transmission.

Since it is a general operation method to continuously allocate resources after acquiring the COT, detailed scheduling is unnecessary. For that reason, the terminal device 40 can differentiate a scheduling unit and a sensing period between the inside and the outside of the COT. By differentiating the scheduling unit and the sensing period, the terminal device 40 can obtain both advantages of the slot scheduling and the mini-slot scheduling.

The following is an example of a configuration of a sidelink physical channel for solving the problems (1) and (2) explained above.

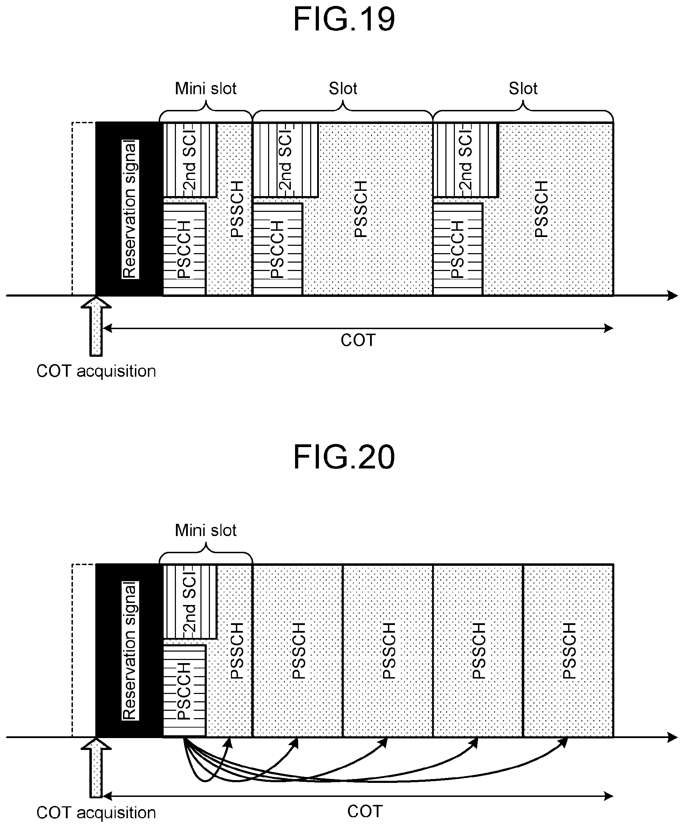

FIG. 19 is a diagram illustrating an example of scheduling in the sidelink of the unlicensed band. In the sidelink of the unlicensed band, when a COT is acquired, the terminal device 40 schedules (transmits) the head sidelink communication in units of mini-slots. On the other hand, in a slot following the head of the COT, the terminal device 40 schedules (transmits) the sidelink in units of slots.

Accordingly, an overhead of control information (the PSCCH and the second SCI) is reduced as compared with the example illustrated in FIG. 18 in which all are scheduled in units of mini-slots.

(Solution in the present embodiment)

In the present embodiment, the communication system 1 adjusts the configuration of the sidelink physical channel and the monitoring/sensing period based on a situation of a COT. With a configuration and an adjustment method according to the present embodiment, the communication system 1 can further carry out sidelink communication with higher communication efficiency in the unlicensed band.

[Configuration of the sidelink physical channel based on a situation of a COT]

First, the sidelink physical channel configuration based on a situation of a COT is explained.

[Multi-slot scheduling by head mini-slot]

As an example of the present embodiment, multi-slot scheduling is performed from the head mini-slot to the rear slot. The terminal device 40 can carry out multi-slot scheduling for performing scheduling from the head mini-slot to rear consecutive slots. Accordingly, an overhead of control information is further reduced as compared with slot-based scheduling.

Specifically, for example, the head mini-slot schedules the rear slots in units of mini-slots.

FIG. 20 is a diagram illustrating an example of multi-slot scheduling in the sidelink of the unlicensed band according to the embodiment of the present disclosure. The example illustrated in FIG. 20 illustrates a case in which the terminal device 40 schedules five PSSCH for the same mini-slot and the following mini-slots using the PSCCH and the second SCI included in the head mini-slot after the COT acquisition.

In the example illustrated in FIG. 20, since the following PSSCH is also scheduled in the mini-slot, fine scheduling is possible on a time axis.

As another example, for example, the head mini-slot schedules the rear slots in units of slots.

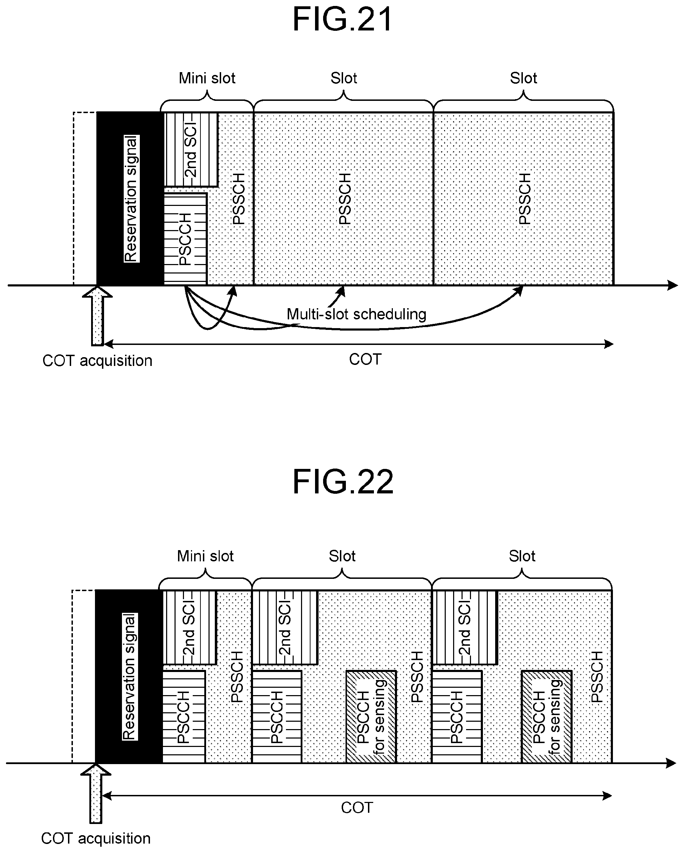

FIG. 21 is a diagram illustrating another example of the multi-slot scheduling in the sidelink of the unlicensed band according to the embodiment of the present disclosure. In the example illustrated in FIG. 21, the terminal device 40 schedules three PSSCH for the same mini-slot and the following slots using the PSCCH and the second SCI included in the head mini-slot after the COT acquisition.

In the example illustrated in FIG. 21, since the slot-based scheduling is performed in the following slot, the overhead of the control information can be further reduced.

Here, in the multi-slot scheduling by the mini-slot explained above, examples of the information included in the first SCI and the second SCI include information concerning the multi-slot scheduling and information concerning the operation in the unlicensed band.

Specific examples of the information included in the first SCI include the following information.

· Information for reserving resources of a plurality of consecutive slots (or mini-slots)
· COT length information
· Information concerning presence of the first SCI and/or the second SCI in the following slots (or mini-slots)

Examples of the information for reserving resources of a plurality of consecutive slots (or a plurality of consecutive mini-slots) include time resource assignment and/or resource reservation period for designating a plurality of consecutive slots.

Specific examples of the information included in the second SCI include information concerning PSSCH scheduling for a plurality of slots (NDI (New Data Indicator) or RV (Redundancy Version)).

Note that a format of the SCI indicating the multi-slot scheduling in this example may be an SCI format (e.g. an SCI format 2-D) different from SCI formats 2-A, 2-B, and 2-C.

As explained above, by including the information indicating the multi-slot scheduling in the SCI (In particular, the first SCI), it is possible to dynamically switch the single-slot scheduling and the multi-slot scheduling. For each sidelink scheduling, it is possible to notify the other terminal devices 40 of whether the scheduling is the single-slot scheduling or the multi-slot scheduling.

[PSCCH for sensing]

As another example of the present embodiment, a configuration of a physical channel that is not used for scheduling and on which a PSCCH (an example of the second PSCCH) is sent for sensing of another terminal device 40 can be assumed. The PSCCH herein is transmitted for sensing and may not be used for other purposes including scheduling.

As a difference between the PSCCH for scheduling and sensing of the related art and the PSCCH for sensing, the PSCCH for sensing is not used for scheduling PSSCH. In other words, the PSCCH for sensing does not involve scheduling. In the following explanation, the PSCCH for sensing is also referred to as PSCCH not involving scheduling.

FIG. 22 is a diagram illustrating another example of the configuration of the physical channel in the sidelink of the unlicensed band according to the embodiment of the present disclosure.

The example illustrated in FIG. 22 illustrates an example in which the terminal device 40 performs the single-slot scheduling. A PSCCH (an example of the first PSCCH) and the second SCI are arranged, for scheduling and sensing, in the head mini-slot and the rear slots. Further, a PSCCH for sensing (an example of the second PSCCH) is arranged, for sensing, in the middle of the slot.

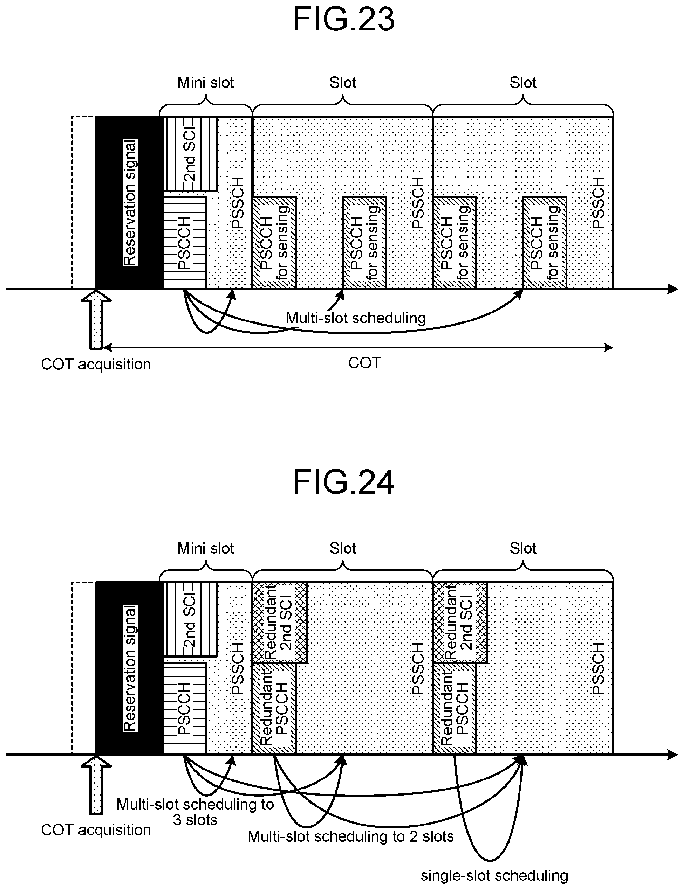

FIG. 23 is a diagram illustrating another example of the configuration of the physical channel in the sidelink of the unlicensed band according to the embodiment of the present disclosure.

In the example illustrated in FIG. 23, an example in which the terminal device 40 performs the multi-slot scheduling is illustrated. A PSCCH (an example of the first PSCCH) and the second SCI are arranged, for scheduling to the head mini-slot and the rear slots, in the head mini-slot. Further, a PSCCH for sensing (the second PSCCH) is arranged, for sensing, at the head and the middle of the slot.

As illustrated in FIG. 22 and FIG. 23, a PSCCH (the first SCI) not used for scheduling may be arranged in the resource acquired by the COT. As a result, the terminal device 40 can provide resource reservation information to the other terminal devices 40 having different scheduling periods.

As a problem of the examples illustrated in FIG. 20 and FIG. 21, if another terminal device 40 misses a PSCCH involving the head scheduling because of factors such as a sensing period and a TDD limit, rear resource reservation information cannot be recognized. Accordingly, it is assumed that contention can occur with sidelink communication by the other terminal device 40 that has missed the PSCCH involving scheduling.

On the other hand, as illustrated in FIG. 22 and FIG. 23, the PSCCH for sensing is arranged at a place where the other terminal device 40 is performing monitoring. In the example illustrated in FIG. 22 and FIG. 23, the PSCCH for sensing is arranged at a period of mini-slots regardless of the mini-slot scheduling, the single-slot scheduling, and the multi-slot scheduling. By disposing the PSCCH for sensing at the same position as the PSCCH involving scheduling, the other terminal device 40 can receive the PSCCH for sensing. Accordingly, even if the other terminal device 40 misses a PSCCH involving the head scheduling, it is possible to recognize rear resource reservation information from the PSCCH for sensing.

(Physical configuration example)

Subsequently, an example of a physical configuration of a PSCCH for sensing (a PSCCH not involving scheduling) is explained.

(First physical configuration example)

As an example, the physical configuration of the PSCCH for sensing (the PSCCH not involving scheduling) is the same as that of the PSCCH involving scheduling. Specifically, scrambling, a modulation scheme, a channel coding scheme, and resource arrangement of the PSCCH for sensing are preferably the same as those of the PSCCH involving scheduling.

Accordingly, the reception device 40R can operate in the same reception process until decoding of the PSCCH is successful regardless of a type of the PSCCH (the first PSCCH or the second PSCCH). That is, the reception device 40R can decode the first PSCCH and the second PSCCH with the same reception process.

On the other hand, in this example, information (distinction information) for distinguishing the PSCCH for sensing (the second PSCCH) and the PSCCH involving scheduling (the first PSCCH) is preferably transmitted. For example, the distinction information is preferably included in the first SCI.

Specific examples of the distinction information included in the first SCI include a second-stage SCI format. The reception device 40R can recognize, with the second-stage SCI format, as the PSCCH for sensing, a PSCCH that is not designated as any second SCI format.

Specifically, when the second-stage SCI format indicates any one of 00, 01, and 10, the reception device 40R recognizes that the received PSCCH is a PSCCH involving scheduling. On the other hand, in a case where the second stage SCI format indicates 11, the reception device 40R recognizes that a received PSCCH is the PSCCH for sensing.

Other specific examples of the distinction information included in the first SCI include a new field. Notification of the new field is provided by using a reserved field (Reserved). The transmission device 40T can designate, with the new field, whether a PSCCH is the PSCCH for sensing or the PSCCH involving scheduling.

Other specific examples of the distinction information included in the first SCI include an Additional MCS table indicator. The transmission device 40T can designate the PSCCH for sensing using 11 reserved in the Additional MCS table indicator.

Specifically, when the Additional MCS table indicator indicates any one of 00, 01, and 10, the reception device 40R recognizes that a received PSCCH is the PSCCH involving scheduling. On the other hand, when the Additional MCS table indicator indicates 11, the reception device 40R recognizes that the received PSCCH is the PSCCH for sensing.

(Second physical configuration example)

As another example, a physical configuration of the PSCCH for sensing (the PSCCH not involving scheduling) is different from the PSCCH involving scheduling.

Specifically, at least one of the following is different between the PSCCH for sensing (the second PSCCH) and the PSCCH involving scheduling (the first PSCCH).

· Scrambling sequence
· Modulation scheme or coding rate
· Channel coding scheme
· Frequency (a resource block or a resource element) or time (symbol) resource disposition
· CRC mask

Since the physical configurations of the first PSCCH and the second PSCCH are different, when both the PSCCHs are decoded in the same reception process, the reception device 40R succeeds in decoding one PSCCH and fails in decoding the other PSCCH. The reception device 40R can distinguish a type of the PSCCH by failing in decoding the other PSCCH.

Accordingly, the transmission device 40T does not have to include the information (the distinction information) for distinguishing the first PSCCH and the second PSCCH in the first SCI. Therefore, it is possible to reduce an overhead of control information. On the other hand, the reception device 40R attempts both of reception processing for the PSCCH for sensing and reception processing for the PSCCH involving scheduling.

Other specific examples of a case in which the first PSCCH and the second PSCCH have different physical configurations include whether scrambling is carried out. Specifically, scrambling is carried out for the PSCCH for sensing (the PSCCH not involving scheduling) and scrambling is not carried out for the PSCCH involving scheduling.

Other specific examples of the case in which the first PSCCH and the second PSCCH have different physical configurations include whether a CRC mask is applied. Specifically, the CRC mask is applied to the PSCCH for sensing and the CRC mask is not applied to the PSCCH involving scheduling (or a CRC mask in which all bits are 0 is applied).

Other specific example of the case in which the first PSCCH and the second PSCCH have different physical configurations include resource disposition. Specifically, the PSCCH for sensing is not arranged in a first symbol (an AGC symbol) and the PSCCH involving scheduling is arranged in the first symbol (the AGC symbol) as well.

(Characteristic example of the second PSCCH)

Examples of characteristics of the PSCCH for sensing (the PSCCH non involving scheduling) include at least information concerning resource reservation. On the other hand, information necessary for decoding PSSCH may not be included in the PSCCH sensing.

The PSCCH for sensing is preferably not linked with the second SCI. That is, the second SCI is correlated with the PSCCH involving scheduling and is not correlated with the PSCCH for sensing.

As explained above, the PSCCH for sensing may not include information necessary for decoding the PSSCH. That is, among the fields of the first SCI included in the PSCCH for sensing, the information concerning scheduling may not be transmitted.

Specifically, for example, the following information and the like included in the PSCCH for sensing are not used for decoding the PSSCH.

· Priority
· DMRS pattern
· Second-stage SCI format
· Beta_offset indicator
· Number of DMRS ports
· Modulation and coding scheme
· Additional MCS table indicator

Further, bits indicating these kinds of information concerning scheduling may be used for notification of other uses. Examples of the notification of other uses include information concerning the unlicensed band (an example of unlicensed band information) and information concerning inter-terminal cooperation.

Specific examples of the information concerning the unlicensed band include the following information.

· COT information (COT length indicator and available RB set)
· Information concerning an LBT Type and CP Extension (ChannelAccess-CPext)
· Information concerning a sensing period
· Information concerning HARQ-ACK feedback timing

Specific examples of the information concerning the inter-terminal cooperation include the following information.

· Preferred resource for the other terminal devices 40

· Non-preferred resource for the other terminal devices 40

The preferred resource for the other terminal devices 40 is a resource that is desired to be selected as a transmission resource for the other terminal devices 40 in the sidelink because the terminal device 40 is in a receivable state with the resource. On the other hand, the non-preferred resource for the other terminal devices 40 is a resource that is not desired to be selected as a transmission resource for the other terminal devices 40 in the sidelink because the terminal device 40 is in a state in which reception is difficult on the resource such as a case in which transmission is scheduled or a sleep state.

Note that the PSCCH for sensing may not be transmitted every time. Whether to transmit the PSCCH for sensing may be determined by the base station 20 or the transmission device 40T.

It is preferable that the reception device 40R is notified of possibility of transmission of the PSCCH for sensing as well. The reception device 40R starts a monitoring operation of the PSCCH for sensing based on the possibility of transmission of the PSCCH for sensing. When notification that the PSCCH for sensing is not transmitted is provided, the reception terminal 40R receives only the PSCCH involving scheduling.

The possibility of transmission of the PSCCH for sensing may be designated by the PSCCH involving scheduling or may be designated by RRC signaling.

Notification of the possibility of transmission of the PSCCH for sensing may be provided together with setting concerning the multi-slot scheduling. For example, when switching of mini-slot-based scheduling and the slot-based scheduling or the multi-slot scheduling is set, whether to transmit the PSCCH for sensing can be further set.

For example, in the resource allocation mode 1, since the resources of the sidelink are controlled by the base station 20, the reception device 40R does not need to perform sensing. That is, in a resource pool in which the resource allocation mode 1 is set (the resource allocation mode 2 is not set), the PSCCH for sensing may not be sent. In other words, when the resource allocation mode 2 is set, the PSCCH for sensing can be transmitted.

Alternatively, when notification of a COT length is not provided, the PSCCH for sensing may not be used.

Alternatively, in the case of sidelink communication in which only one time unit of scheduling is defined, since transmission and reception of the PSCCH of the related art is sufficient, the PSCCH for sensing may not be used. For example, in sidelink communication to which only any one of the mini-slot scheduling, the single-slot scheduling, and the multi-slot scheduling is applied, the PSCCH for sensing may not be used.

As explained above, when the PSCCH for sensing is unnecessary, the transmission device 40T may not transmit the PSCCH for sensing. Accordingly, the communication system 1 can reduce a control overhead of sidelink transmission.

The PSCCH for sensing is preferably not arranged in a symbol of a DMRS.

When transmission of the PSCCH for sensing is set, it is preferable that an additional DMRS is set to be not transmitted. Alternatively, when an additional DMRS is set, the PSCCH for sensing is preferably arranged in a symbol not overlapping a DMRS symbol.

Alternatively, when the DMRS symbol and a PSCCH symbol for sensing overlap, DMRS transmission is prioritized. That is, when an additional DMRS is set, the additional DMRS is transmitted and the PSCCH for sensing is dropped and, when an additional DMRS is not set, the PSCCH for sensing is transmitted.

A head symbol in which the PSCCH for sensing is arranged can be set by RRC signaling. The head symbol in which the PSCCH for sensing is arranged may be the same as monitoring timing of the mini-slot.

The PSCCH for sensing is not used for scheduling the PSSCH. That is, the PSCCH for sensing does not schedule PSSCH reception. PSSCH transmission is not correlated with transmission of the PSCCH for sensing.

(Resource mapping example of the PSSCH in the case in which the PSCCH for sensing is transmitted)

Subsequently, a physical configuration example of the PSSCH in the case in which the PSCCH for sensing (the PSCCH not involving scheduling) is transmitted is explained.

As illustrated in FIG. 22 and FIG. 23, the PSCCH for sensing is transmitted using a part of resources of the PSSCH. In this case, it is difficult to transmit the PSSCH on the resource to which the PSCCH for sensing is transmitted. Therefore, it is necessary to change the resource mapping of the PSSCH.

As an example of the resource mapping of the PSSCH, the PSSCH is punctured in a resource in which the PSCCH for sensing is arranged. Puncture is a technique of extracting and transmitting a part of a signal scheduled to be transmitted. In this example, a signal of the PSSCH scheduled to be transmitted using the resource of the PSCCH for sensing is not transmitted. The signal of the PSSCH is overwritten on a signal of the PSCCH.

As another example of the resource mapping of the PSSCH, the PSSCH is rate-matched considering the resource in which the PSCCH for sensing is arranged. The rate match is a technique of, when unusable resources are known in advance, performing rate control for codes considering only available resources and performing resource mapping while avoiding the unusable resources. In this example, the rate control and the resource mapping of the PSSCH are performed assuming that the resource of the PSCCH for sensing is a resource unusable for the PSSCH.

[PSCCH for improvement of redundancy in the multi-slot scheduling]

As another example of the present embodiment, a configuration of a physical channel to which a PSCCH (an example of the second PSCCH) for providing notification of scheduling information is sent even from the middle of the multi-slot scheduling can be assumed.

FIG. 24 is a diagram illustrating an example of the second PSCCH in the multi-slot scheduling according to the embodiment of the present disclosure.

As illustrated in FIG. 24, with the first PSCCH and the second SCI, a PSSCH is scheduled for rear two slots (second and third slots) continuous to a mini-slot by the multi-slot scheduling. The first PSCCH and the second SCI are transmitted in the head mini-slot.

Further, in the second slot, with the second PSCCH (a redundant PSCCH) and the second SCI (a redundant second SCI) corresponding to the second PSCCH, a PSSCH is scheduled for the second and third slots by the multi-slot scheduling.

Further, in the third slot, with the second PSCCH (the redundant PSCCH) and the second SCI (the redundant second SCI) corresponding to the second PSCCH, a PSSCH is scheduled for the third slot by the single slot scheduling.

As illustrated in FIG. 24, in the multi-slot scheduling as well, in a rear slot, control information (the first SCI and the second SCI) including scheduling information of subsequent slots of the rear slot is transmitted. Accordingly, even when a front PSCCH (for example, transmitted in the head mini-slot) and the second SCI are missed, the terminal device 40 can receive a rear redundant PSCCH and the redundant second SCI. Therefore, the terminal device 40 can receive the remaining PSSCH in the multi-slot scheduling.

In multi-slot scheduling, the redundant PSCCH and the redundant second SCI include at least scheduling information of the remaining PSSCH. On the other hand, the redundant PSCCH and the redundant second SCI may not include forward scheduling information.

As a specific example, in FIG. 24, when the HARQ process number of the second SCI of the mini-slot indicates "0", an HARQ process number of the redundant second SCI of the second slot is indicated as "1". In this case, an HARQ process number of the redundant second SCI of the third slot is indicated as "2".

As another specific example, the second SCI of the mini-slot includes an NDI and an RV corresponding to three PSSCHs to be scheduled. The redundant second SCI of the second slot includes an NDI and an RV corresponding to two PSSCHs to be scheduled. The redundant second SCI of the third slot includes an NDI and an RV corresponding to one PSSCH to be scheduled.

In the redundant PSCCH and the redundant second SCI, control information intended to be different from that of the head PSCCH and the second SCI must not be transmitted. For example, time axis resource and frequency axis resource information indicated by the redundant PSCCH and the redundant second SCI must not indicate resources different from those of the head PSCCH and the second SCI.

[Adjustment of a monitoring/sensing period]

Subsequently, an adjustment method for a monitoring/sensing period is explained. The adjustment method is executed by, for example, the reception device 40R.

The operation of the reception device 40R can also be switched according to the switching of the mini-slot-based scheduling and the slot-based scheduling corresponding to the situation of the COT or the multi-slot scheduling. For example, the reception device 40R can change the monitoring/sensing period of the PSCCH with a resource scheduled by the PSCCH (for example, the first PSCCH) and a resource that is not scheduled.

For example, when notification that a resource has already been reserved by scheduling is provided, the reception device 40R may skip monitoring or sensing of the PSCCH (may not perform monitoring or sensing). Accordingly, the reception device 40R can further reduce power consumption due to an increase in a PSCCH monitoring frequency.

(Adjustment method 1)

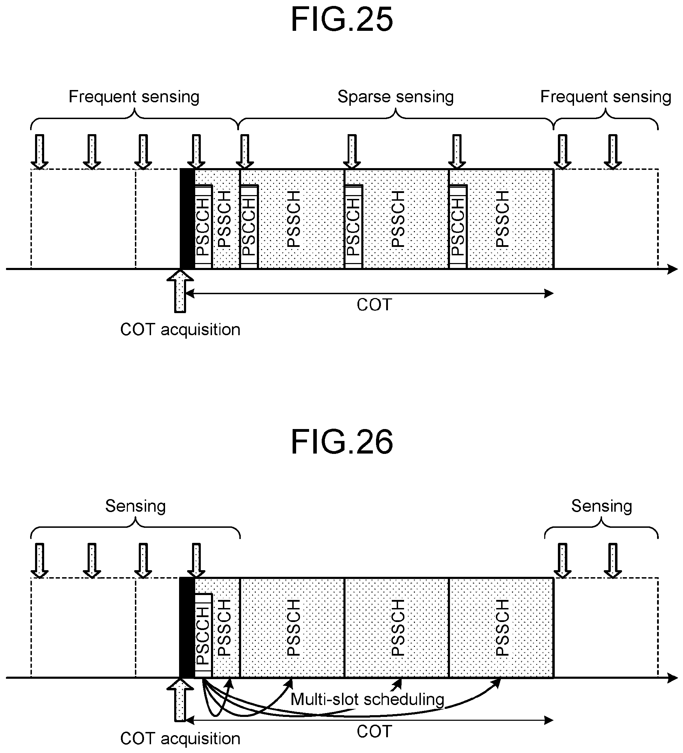

FIG. 25 is a diagram illustrating an example of an adjustment method for a monitoring/sensing period according to the embodiment of the present disclosure. FIG. 25 illustrates, for example, an adjustment method in the case in which the transmission device 40T switches the mini-slot-based scheduling and the slot-based scheduling based on a situation of a COT.

Before the transmission device 40T performs transmission, the reception device 40R performs monitoring/sensing at a transmission interval of a mini-slot.

On the other hand, after the transmission device 40T acquires a COT and starts the sidelink communication, the transmission device 40T performs scheduling on a slot basis. Therefore, when communication by the transmission device 40T is started, the reception device 40R can perform monitoring/sensing at a transmission interval of a slot and skip the monitoring/sensing at timing of the mini-slot. As explained above, the reception device 40R can change a period (the mini-slot/the slot) of monitoring the PSCCH for a resource before starting the sidelink communication (a resource not scheduled in the first PSCCH) and a resource after starting the sidelink communication (a resource scheduled in the first PSCCH).

In the adjustment method 1, the reception device 40R can adjust the monitoring/sensing period based on information concerning whether the PSSCH is the mini-slot-based scheduling or the slot-based scheduling in addition to the COT information of the transmission device 40T. For example, even in the COT, when the mini-slot-based scheduling is performed, a monitoring/sensing period equivalent to that outside the COT is applied to the reception device 40R.

(Adjustment method 2)

FIG. 26 is a diagram illustrating another example of the adjustment method for the monitoring/sensing period according to the embodiment of the present disclosure. FIG. 26 illustrates, for example, an adjustment method in the case in which the transmission device 40T carries out the multi-slot scheduling.

Before the transmission device 40T performs transmission, the reception device 40R performs monitoring/sensing at a transmission interval of a mini-slot.

On the other hand, when a COT is acquired and sidelink communication is started, the transmission device 40T reserves scheduling for a plurality of slots with the multi-slot scheduling. In the example illustrated in FIG. 26, the transmission device 40T schedules four PSSCHs for the head mini-slot and three slots following the mini-slot using the head mini-slot.

Since the reception device 40R that has received the PSCCH involving scheduling in the mini-slot recognizes that the PSSCH is scheduled in the following three slots, the reception device 40R can skip the monitoring/sensing in a slot scheduled by the PSCCH.

(Adjustment method 3)

When the transmission device 40T uses the PSCCH for sensing explained above, the reception device 40R can more efficiently switch the monitoring/sensing period.

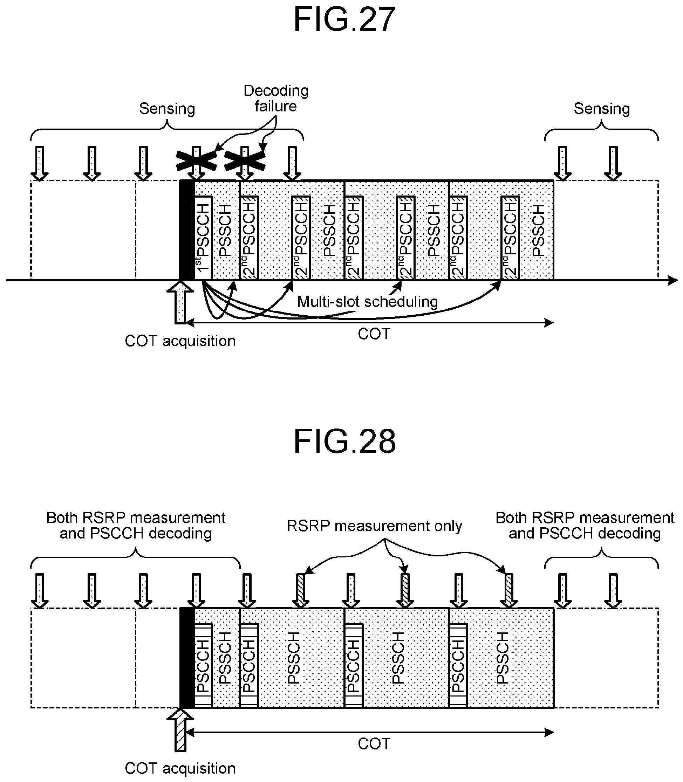

FIG. 27 is a diagram illustrating another example of the adjustment method for the monitoring/sensing period according to the embodiment of the present disclosure. FIG. 27 illustrates, for example, an adjustment method in the case in which the transmission device 40T performs the multi-slot scheduling. In FIG. 27, the transmission device 40T transmits the PSCCH for sensing.

Before the transmission device 40T performs transmission, the reception device 40R performs monitoring/sensing at a transmission interval of a mini-slot.

On the other hand, when a COT is acquired and sidelink communication is started, the transmission device 40T reserves scheduling for a plurality of slots with the multi-slot scheduling.

In the example illustrated in FIG. 27, the transmission device 40T schedules four PSSCHs for the head mini-slot and three slots following the mini-slot using a PSCCH (first PSCCH in FIG. 27) transmitted by the head mini-slot. In FIG. 27, the transmission device 40T transmits the PSCCH for sensing (the second PSCCH in FIG. 27) in each of the slots. The transmission device 40T transmits the PSCCH for sensing at each of the head and the middle of the slot.

The reception device 40R that has received the PSCCH in the mini-slot can skip the monitoring/sensing of the slot scheduled by the PSCCH.

However, as illustrated in FIG. 27, when failing in decoding (detection) of the PSCCH (the first PSCCH) transmitted by the mini-slot, the reception device 40R receives the PSCCH for sensing (the second PSCCH) in the following slot until the PSCCH for sensing is successfully decoded (detected).

In the example illustrated in FIG. 27, the reception device 40R fails in decoding (detecting) the first PSCCH for sensing and succeeds in decoding (detecting) the next PSCCH for sensing. For that reason, the reception device 40R can skip monitoring/sensing of a second scheduled slot and subsequent slots.

As explained above, since the transmission device 40T transmits the PSCCH for sensing, the reception device 40R can receive the PSCCH for sensing in the following slot even if the reception device 40R fails in the reception of the PSCCH for scheduling. The reception device 40R can change (for example, skip) a monitoring/sensing period based on resource reservation information by the multi-slot scheduling included in the received PSCCH for sensing.

Note that, as explained above, the PSCCH for sensing may not be transmitted. In this case, the adjustment method 1 or 2 may be applied. That is, the adjustment method may be dynamically switched according to whether the PSCCH for sensing can be transmitted.

(Adjustment method 4)

In the adjustment method explained above, the reception device 40R skips the sensing/monitoring. However, the reception device 40R may skip the decoding of the PSCCH. In this case, the reception device 40R performs RSRP measurement without decoding the PSCCH.

FIG. 28 is a diagram illustrating another example of the adjustment method for the monitoring/sensing period according to the embodiment of the present disclosure. FIG. 28 illustrates, for example, an adjustment method in the case in which the transmission device 40T switches the mini-slot-based scheduling and the slot-based scheduling based on a situation of a COT.

The reception device 40R frequently performs RSRP (reception power) measurement for resource sensing regardless of a situation of a COT or a situation of resource reservation. On the other hand, the reception device 40R skips decoding of a PSCCH having a high processing load according to situations in the COT or the resource reservation.

For example, in FIG. 28, the reception device 40R performs monitoring/sensing at a transmission interval of a mini-slot until the transmission device 40T performs transmission.

After the transmission device 40T acquires a COT and starts sidelink communication, the transmission device 40T performs scheduling on a slot basis. For that reason, when communication by the transmission device 40T is started, the reception device 40R performs monitoring/sensing (decoding of a PSCCH) at a transmission interval of a slot and skips decoding of the PSCCH at timing of the mini-slot. On the other hand, the reception device 40R measures RSRP at the timing of the mini-slot (timing at which the decoding of the PSCCH is skipped or timing corresponding to a monitoring/sensing period before the sidelink communication start).

Note that the case in which the transmission device 40T switches the mini-slot-based scheduling and the slot-based scheduling is explained above. The same applies to a case in which the transmission device 40T performs the multi-slot scheduling. That is, when the transmission device 40T performs the multi-slot scheduling, similarly, the reception device 40R can measure the RSRP while skipping the decoding of the PSCCH at the timing of the mini-slot. The same applies to a case in which the transmission device 40T transmits the PSCCH for sensing.

Accordingly, the reception device 40R can continuously carry out sensing regardless of whether the PSCCH is transmitted. By continuing reception power measurement having a low processing load while reducing the number of times of PSCCH decoding having a high processing load, the reception device 40R can reduce power consumption.

[Sharing of COT information in a sidelink]

The operation of the communication system 1 explained above is switched based on COT information. Therefore, in the sidelink of the unlicensed band, the COT information needs to be shared between the terminal devices 40. In the following explanation, sharing methods for COT information in the sidelink are listed.

(Sharing method 1)

As an example of the sharing method for the COT information in the sidelink, there is a method in which the transmission device 40T provides notification of the COT information with the PSCCH. The transmission device 40T that has acquired a COT includes acquired COT information (a COT length and the like) in the PSCCH.

When the transmission device 40T transmits the PSCCH including the COT information, the terminal devices 40 (the other terminal devices 40) other than the destination of the PSCCH can also recognize the COT information. Since the COT information is included in the PSCCH, the other terminal devices 40 can recognize the COT information earlier compared with other sharing methods explained below.

(Sharing method 2)

As another example of the sharing of the COT information in the sidelink, there is a method in which the transmission device 40T provides notification of the COT information with the second SCI. The transmission device 40T that has acquired a COT includes acquired COT information (a COT length and the like) in the second SCI.

When the transmission device 40T transmits the easily extensible second SCI including the COT information, the terminal devices 40 (the other terminal devices 40) other than the destination can also recognize the COT information.

(Sharing method 3)

As another example of the sharing of the COT information in the sidelink, there is a method in which the transmission device 40T provides notification of the COT information with SL-SCH, a cast type of which is broadcast.

The transmission device 40T can provide the COT information to all the receivable terminal devices 40 (the other terminal devices 40) by transmitting the COT information by broadcast. The transmission device 40T can transmit the COT information with many bits by including the COT information in the SL-SCH and providing notification of the COT information.

[Adjustment of the COT information for a hidden terminal]

Even if the sensing period is adjusted based on the COT, missing of sidelink data can occur when there is transmission from a hidden terminal device 40H.

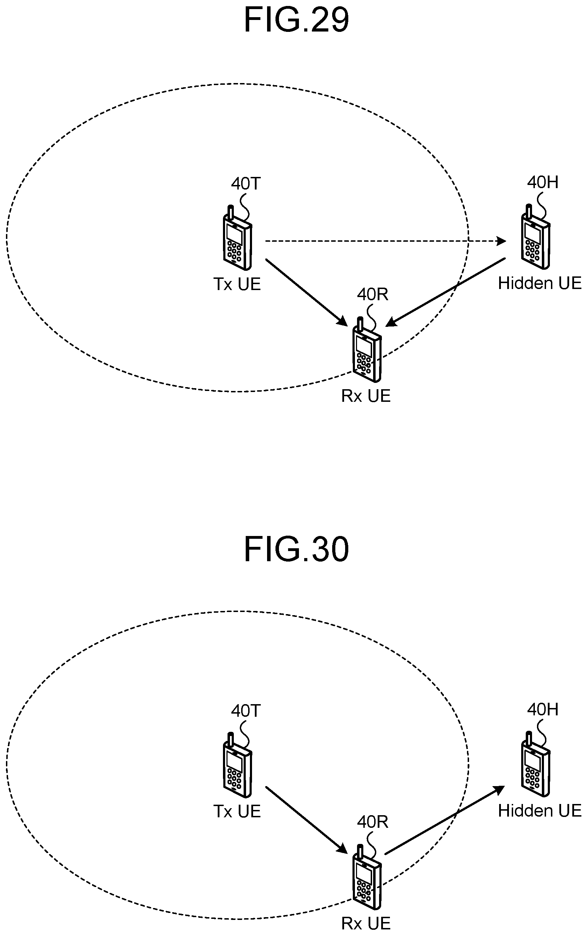

FIG. 29 is a diagram illustrating an example of a hidden terminal problem in the sidelink of the unlicensed band. The transmission device 40T (Tx UE) performs sidelink transmission to the reception device 40R (Rx UE).

On the other hand, when a value of reception power is lower than an ED (Energy Detection) threshold of an LBT, a hidden terminal device 40H (Hidden UE) recognizes that a channel is idle and can perform sidelink transmission on the same resource as a resource of the transmission device 40T. For that reason, it is likely that contention between the transmission device 40T and the hidden terminal device 40H occurs.

In order to solve this problem, the reception device 40R according to the embodiment of the present disclosure transfers COT information of the transmission device 40T to the hidden terminal device 40H.

FIG. 30 is a diagram illustrating an example of transfer of COT information in the sidelink of the unlicensed band according to the embodiment of the present disclosure.

As illustrated in FIG. 30, the transmission device 40T performs sidelink transmission including the COT information to the reception device 40R (an example of a first communication device). The reception device 40R transfers the COT information acquired from the transmission device 40T to the hidden terminal device 40H (an example of a second communication device).

Accordingly, the hidden terminal device 40H can recognize the COT information of the transmission device 40T and can avoid contention of the sidelink.

As an example of a method of transferring the COT information, there is a method in which the reception device 40R notifies a hidden terminal of the COT information using the PSFCH.

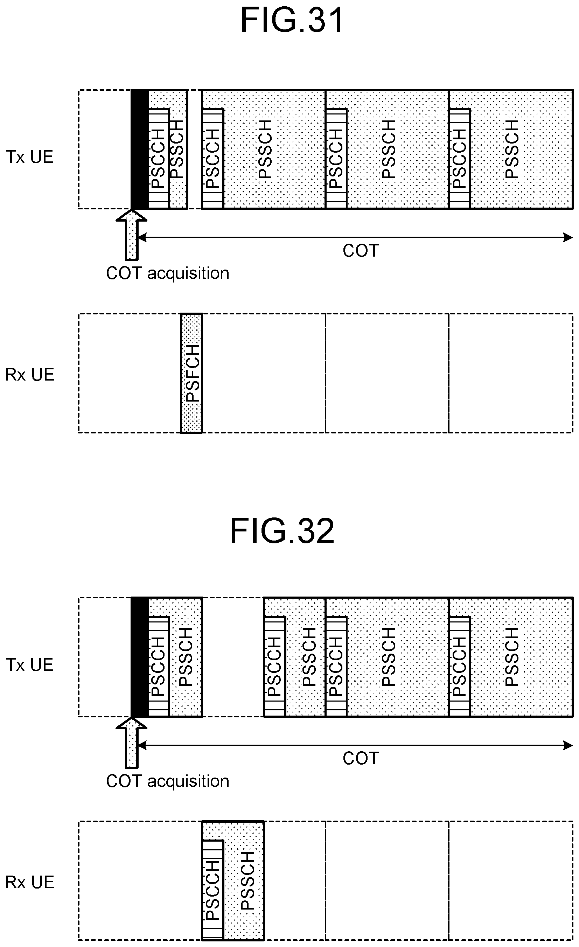

FIG. 31 is a diagram illustrating an example of the transfer of COT information according to the embodiment of the present disclosure.

The transmission device 40T (Tx UE) performs sidelink transmission after COT acquisition. The reception device 40R (Rx UE) transmits the PSFCH as a response to the head sidelink transmission of the transmission device 40T. In the example illustrated in FIG. 31, the reception device 40R transmits the PSFCH at the end of the head mini-slot after the COT acquisition.

Accordingly, the reception device 40R can transfer the COT information of the transmission device 40T to the hidden terminal device 40H.

On the other hand, when the reception device 40R did not successfully transmit the PSFCH, it is likely that the hidden terminal device 40H has already acquired the COT. Therefore, when the transmission device 40T did not successfully receive the PSFCH, the transmission device 40T may not perform transmission in the COT after timing when the transmission device 40T was scheduled to receive the PSFCH. That is, when failing in receiving the COT information included in the PSFCH, the transmission device 40T can stop the sidelink communication in the acquired COT.

Accordingly, the transmission device 40T can avoid contention of sidelink transmission with the hidden terminal device 40H.

As another example of the method of transferring COT information, there is a method in which the reception device 40R notifies the hidden terminal device 40H of COT information using a mini-slot PSSCH.

FIG. 32 is a diagram illustrating another example of the transfer of COT information according to the embodiment of the present disclosure.

The transmission device 40T performs sidelink transmission after COT acquisition. The reception device 40R shares a COT of the transmission device 40T and performs sidelink transmission including COT information of the transmission device 40T with a mini-slot.

In the example illustrated in FIG. 32, the reception device 40R performs the sidelink transmission including a PSCCH and a PSSCH with the next mini-slot of the head mini-slot after the COT acquisition.

Accordingly, the reception device 40R can transfer the COT information of the transmission device 40T to the hidden terminal device 40H.

On the other hand, when the reception device 40R did not successfully perform the sidelink transmission, it is likely that the hidden terminal device 40H has already acquired a COT. Therefore, when the transmission device 40T did not successfully receive sidelink communication from the reception device 40R, the transmission device 40T may not perform transmission in the COT after timing when the transmission device 40T was scheduled to receive the sidelink communication. That is, when the transmission device 40T failed in receiving COT information transmitted by the reception device 40R, the transmission device 40T can stop the sidelink communication in the acquired COT.

Accordingly, the transmission device 40T can avoid contention of sidelink transmission with the hidden terminal device 40H.

<<5. Other embodiments>>

The embodiments and the application examples explained above indicate examples, and various modifications and applications are possible.

For example, in the embodiment explained above, the terminal device 40 performs the sidelink communication in the unlicensed band. However, a frequency band in which the terminal device 40 performs the sidelink communication is not limited to the unlicensed band. The terminal device 40 can perform the sidelink communication in a licensed band. In this case as well, the transmission device 40T can transmit the second PSCCH different from the first PSCCH.

For example, a control device that controls the base station 20 and the terminal device 40 in the embodiment explained above may be implemented by a dedicated computer system or may be implemented by a general-purpose computer system.

For example, a communication program for executing the operation explained above is distributed by being stored in a computer-readable recording medium such as an optical disk, a semiconductor memory, a magnetic tape, or a flexible disk. Then, for example, the program is installed in a computer and the control device is configured by executing the processing explained above. At this time, the control device may be a device (for example, a personal computer) outside the base station 20 and the terminal device 40. The control device may be a device (for example, the control units 23 and 43) inside the base station 20 and the terminal device 40.

The communication program explained above may be stored in a disk device included in a server device on a network such as the Internet such that the communication program can be downloaded to a computer. The functions explained above may be implemented by cooperation of an OS (Operating System) and application software. In this case, a portion other than the OS may be stored in a medium and distributed or the portion other than the OS may be stored in the server device such that the portion can be downloaded to the computer.

Among the kinds of processing explained in the embodiments, all or a part of the processing explained as being automatically performed can be manually performed or all or a part of the processing explained as being manually performed can be automatically performed by a publicly-known method. Besides, the processing procedures, the specific names, and the information including the various data and parameters explained in the document and illustrated in the figures can be optionally changed except when specifically noted otherwise. For example, the various kinds of information illustrated in the figures are not limited to the illustrated information.

The illustrated components of the devices are functionally conceptual and are not always required to be physically set as illustrated in the figures. That is, specific forms of distribution and integration of the devices are not limited to the illustrated forms and all or a part thereof can be functionally or physically distributed and integrated in any unit according to various loads, usage situations, and the like. Note that this configuration by the distribution and the integration may be dynamically performed.

The embodiments explained above can be combined as appropriate in a range for not causing processing contents to contradict one another.

For example, the present embodiment can be implemented as any configuration configuring a device or a system, for example, a processor functioning as a system LSI (Large Scale Integration) or the like, a module using a plurality of processors or the like, a unit using a plurality of modules or the like, a set obtained by further adding other functions to the unit, and the like (that is, a configuration of a part of the device).

Note that, in the present embodiments, the system means a set of a plurality of components (devices, modules (parts), and the like). It does not matter whether all the components are present in the same housing. Therefore, both of a plurality of devices housed in separate housings and connected via a network and one device in which a plurality of modules are housed in one housing are systems.

For example, the present embodiments can adopt a configuration of cloud computing in which one function is shared and processed by a plurality of devices in cooperation via a network.

<<6. Conclusion>>

Although the embodiment of the present disclosure is explained above, the technical scope of the present disclosure is not limited to the embodiment per se, and various modifications can be made without departing from the gist of the present disclosure. Components in different embodiments and modifications may be combined as appropriate.

The effects in the embodiments described in this specification are only illustrations and are not limited. Other effects may be present.

Note that the present technique can also take the following configurations.

(1) A communication method comprising:

performing sidelink communication with a first communication device;

performing scheduling of a resource for performing the sidelink communication using a first PSCCH; and transmitting a second PSCCH different from the first PSCCH on the resource on which the scheduling has been performed.

(2) The communication method according to (1), wherein the second PSCCH is a PSCCH not involving scheduling.

(3) The communication method according to (2), wherein the second PSCCH is transmitted for sensing.

(4) The communication method according to any one of (1) to (3), further comprising transmitting distinction information for distinguishing the first PSCCH and the second PSCCH.

(5) The communication method described in (4), in which the distinction information is at least one of a second-stage SCI format, a new field, and an Additional MCS table indicator.

(6) The communication method according to any one of (1) to (3), wherein the second PSCCH has a physical configuration different from a physical configuration of the first PSCCH.

(7) The communication method according to (6), wherein scrambling is carried out for the first PSCCH, and scrambling is not carried out for the second PSCCH.

(8) The communication method described in (6) or (7), in which a CRC mask is applied to the second PSCCH.

(9) The communication method described in any one of (6) to (8), in which the second PSCCH does not include information used for decoding a PSCCH.

(10) The communication method described in any one of (1) to (9), in which a second SCI is correlated with the first PSCCH and is not correlated with the second PSCCH.

(11) The communication method according to any one of (1) to (10), wherein the second PSCCH is transmitted when the sidelink communication is performed in a resource allocation mode 2.

(12) The communication method described in any one of (1) to (11), in which the second PSCCH is arranged in a symbol other than a DMRS symbol.

(13) The communication method according to any one of (1) to (12), wherein the first PSCCH is used for scheduling of a plurality of slots.

(14) The communication method according to any one of (1) to (13), wherein the sidelink communication is performed in an unlicensed band.

(15) The communication method according to (14), wherein the second PSCCH includes unlicensed band information concerning the unlicensed band.

(16) The communication method according to (14) or (15), further comprising

notifying the first communication device of COT information concerning a COT acquired in the unlicensed band, wherein

the first communication device transfers the COT information to a second communication device.

(17) The communication method described in (16), in which the first communication device transfers the COT information to the second communication device using a PSFCH.

(18) The communication method described in (16), in which the first communication device transfers the COT information to the second communication device by performing sidelink transmission using a resource scheduled using a PSCCH.

(19) The communication method according to any one of (16) to (18), further comprising stopping the sidelink communication in the acquired COT when failing in reception of a signal including the COT information transferred by the first communication device.

(20) The communication method according to any one of (1) to (19), wherein another communication device changes a period of monitoring a PSCCH with the resource scheduled by the first PSCCH and a resource that is not scheduled.

(21) The communication method according to (20), wherein the first communication device does not monitor the PSCCH on the resource scheduled by the first PSCCH.

(22) The communication method according to (20) or (21), wherein, even when failing in reception of the first PSCCH, when receiving the second PSCCH, the other communication device changes a period of monitoring the PSCCH on the resource scheduled by the first PSCCH.

(23) The communication method according to any one of (20) to (22), wherein the other communication device performs, on the resource scheduled by the first PSCCH, reception power measurement at a timing corresponding to a monitoring period of a PSCCH on a resource that is not scheduled.

(24) A communication method comprising:

determining whether to use a second PSCCH different from a first PSCCH in sidelink communication performed between a transmission device and a reception device; and

notifying the reception device of a determination result, wherein

the first PSCCH includes information concerning scheduling of a resource used when the sidelink communication is performed, and

the second PSCCH is transmitted on the resource scheduled by the first PSCCH.

(25) A communication device comprising:

a communication unit that performs sidelink communication with a first communication device; and

a control unit that performs scheduling of a resource for performing the sidelink communication using a first PSCCH, and

transmits a second PSCCH different from the first PSCCH on the resource on which the scheduling has been performed.

Reference Signs List

1 COMMUNICATION SYSTEM
20 BASE STATION
21, 41 WIRELESS COMMUNICATION UNIT
22, 42 STORAGE UNIT
23, 43 CONTROL UNIT
40 TERMINAL DEVICE

**Claims**

1. A communication method comprising:

performing sidelink communication with a first communication device;

performing scheduling of a resource for performing the sidelink communication using a first PSCCH; and

transmitting a second PSCCH different from the first PSCCH on the resource on which the scheduling has been performed.

2. The communication method according to claim 1, wherein the second PSCCH is a PSCCH not involving scheduling.

3. The communication method according to claim 2, wherein the second PSCCH is transmitted for sensing.

4. The communication method according to claim 1, further comprising transmitting distinction information for distinguishing the first PSCCH and the second PSCCH.

5. The communication method according to claim 4, wherein the distinction information is a second-stage SCI format.

6. The communication method according to claim 1, wherein the second PSCCH has a physical configuration different from a physical configuration of the first PSCCH.

7. The communication method according to claim 6, wherein

scrambling is carried out for the first PSCCH, and

scrambling is not carried out for the second PSCCH.

8. The communication method according to claim 1, wherein the second PSCCH is transmitted when the sidelink communication is performed in a resource allocation mode 2.

9. The communication method according to claim 1, wherein the first PSCCH is used for scheduling of a plurality of slots.

10. The communication method according to claim 1, wherein the sidelink communication is performed in an unlicensed band.

11. The communication method according to claim 10, wherein the second PSCCH includes unlicensed band information concerning the unlicensed band.

12. The communication method according to claim 10, further comprising

notifying the first communication device of COT information concerning a COT acquired in the unlicensed band, wherein
the first communication device transfers the COT information to a second communication device.

13. The communication method according to claim 12, further comprising stopping the sidelink communication in the acquired COT when failing in reception of a signal including the COT information transferred by the first communication device.

14. The communication method according to claim 1, wherein another communication device changes a period of monitoring a PSCCH with the resource scheduled by the first PSCCH and a resource that is not scheduled.

15. The communication method according to claim 14, wherein the first communication device does not monitor the PSCCH on the resource scheduled by the first PSCCH.

16. The communication method according to claim 14, wherein, even when failing in reception of the first PSCCH, when receiving the second PSCCH, the other communication device changes a period of monitoring the PSCCH on the resource scheduled by the first PSCCH.

17. The communication method according to claim 14, wherein the other communication device performs, on the resource scheduled by the first PSCCH, reception power measurement at a timing corresponding to a monitoring period of a PSCCH on a resource that is not scheduled.

18. A communication method comprising:

determining whether to use a second PSCCH different from a first PSCCH in sidelink communication performed between a transmission device and a reception device; and
notifying the reception device of a determination result, wherein
the first PSCCH includes information concerning scheduling of a resource used when the sidelink communication is performed, and
the second PSCCH is transmitted on the resource scheduled by the first PSCCH.

19. A communication device comprising:

a communication unit that performs sidelink communication with a first communication device; and
a control unit that performs scheduling of a resource for performing the sidelink communication using a first PSCCH, and
transmits a second PSCCH different from the first PSCCH on the resource on which the scheduling has been performed.

# FIG.1

# FIG.2

# FIG.3

10

MANAGEMENT DEVICE

| 11 | 13 | 12 |
| --- | --- | --- |
| COMMUNI-CATION UNIT | CONTROL UNIT | STORAGE UNIT |

# FIG.4

BASE STATION ~20

WIRELESS COMMUNICATION UNIT ~21

TRANSMISSION PROCESSING UNIT ~211

| 211d | 211c | 211b | 211a |
|------|------|------|------|
| WIRELESS TRANSMIS-SION UNIT | MULTI-PLEXING UNIT | MODULA-TION UNIT | ENCODING UNIT |

RECEPTION PROCESSING UNIT ~212

| 212a | 212b | 212c | 212d |
|------|------|------|------|
| WIRELESS RECEP-TION UNIT | DEMULTI-PLEXING UNIT | DEMODULA-TION UNIT | DECODING UNIT |

213

STORAGE UNIT ~22

CONTROL UNIT ~23

ACQUISITION UNIT 231

TRANSMISSION UNIT 232

COMMUNICATION CONTROL UNIT 233

# FIG.5

RELAY STATION 30

WIRELESS COMMUNICATION UNIT 31

TRANSMISSION PROCESSING UNIT 311

RECEPTION PROCESSING UNIT 312

313

STORAGE UNIT 32

CONTROL UNIT 33

ACQUISITION UNIT 331

TRANSMISSION UNIT 332

COMMUNICATION CONTROL UNIT 333

# FIG.6

40

TERMINAL DEVICE

413

41

WIRELESS COMMUNICATION UNIT

| TRANSMISSION PROCESSING UNIT | 411 |

| RECEPTION PROCESSING UNIT | 412 |

42

43

CONTROL UNIT

STORAGE UNIT

| ACQUISITION UNIT | 431 |

| TRANSMISSION UNIT | 432 |

| COMMUNICATION CONTROL UNIT | 433 |

# FIG.7

RADIO FRAME
10msec

SUBFRAME
1msec

SLOT

SYMBOL

# FIG.8

20

40
(40T,40R)

40(40R)

40
(40T)

40(40R)

40(40T)

C

# FIG.9

SLOT

# FIG.10

SLOT

# FIG.11

# FIG.12

20

Configuration

gNB

40P

Assistant
information

Primary UE

Assistant
inforamtion

40S

40S

SIDELINK
COMMUNICATION

UE group

# FIG.13

# FIG.14

# FIG.15

16us

Cat 1 LBT

| Transmission | Tx. gap | Transmission |

25us

Cat 2 LBT

| CCA | Transmission |

Contension window

Cat 3 LBT
Cat 4 LBT

| CCA | CCA | CCA | CCA | CCA | Transmission |

9us

COT
Up to 10ms

# FIG.16

UUT
CCA

CCA                CCA                CCA

UUT
Transmission

COT        Idle
Period

COT        Idle
Period

Fixed Frame Period        Fixed Frame Period

# FIG.17

Reservation signal

2nd SCI
PSCCH
PSSCH

2nd SCI
PSCCH
PSSCH

COT acquisition

COT

# FIG.18

Mini slot

Reservation signal

2nd SCI
PSCCH
PSSCH

2nd SCI
PSCCH
PSSCH

2nd SCI
PSCCH
PSSCH

2nd SCI
PSCCH
PSSCH

2nd SCI
PSCCH
PSSCH

COT acquisition

COT

# FIG.19

# FIG.20

## FIG.21

## FIG.22

# FIG.23

# FIG.24

# FIG.25

# FIG.26

# FIG.27

Sensing

Decoding failure

Sensing

1st PSCCH | PSSCH | 2nd PSCCH | 2nd PSCCH | PSSCH | 2nd PSCCH | 2nd PSCCH | PSSCH | 2nd PSCCH | 2nd PSCCH | PSSCH

COT acquisition

Multi-slot scheduling

COT

# FIG.28

Both RSRP measurement and PSCCH decoding

RSRP measurement only

Both RSRP measurement and PSCCH decoding

PSCCH | PSSCH | PSCCH | PSSCH | PSCCH | PSSCH | PSCCH | PSSCH

COT acquisition

COT

# FIG.29

# FIG.30

# FIG.31

# FIG.32

## INTERNATIONAL SEARCH REPORT

| | International application No. |
|---|---|
| | **PCT/JP2023/025836** |

**A. CLASSIFICATION OF SUBJECT MATTER**

*H04W 72/20*(2023.01)i; *H04W 16/14*(2009.01)i; *H04W 72/54*(2023.01)i; *H04W 92/18*(2009.01)i
FI: H04W72/20; H04W92/18; H04W16/14; H04W72/54 110

According to International Patent Classification (IPC) or to both national classification and IPC

**B. FIELDS SEARCHED**

Minimum documentation searched (classification system followed by classification symbols)

H04B7/24-7/26;H04W4/00-99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | QUALCOMM INCORPORATED. Physical Channel Design for Sidelink on Unlicensed Spectrum. 3GPP TSG RAN WG1 #109-e R1-2205034. 29 April 2022 sections 2.1.1.4, 2.1.2 | 1-19 |
| A | INTEL CORPORATION. On the Enhancements to the Physical Channel Design for SL Operating in Unlicensed Spectrum. 3GPP TSG RAN WG1 #109-e R1-2204803. 30 April 2022 section 2.4 | 1-19 |

☐ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **29 August 2023** | **12 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **QUALCOMM**. Physical Channel Design for Sidelink on Unlicensed Spectrum. *R1-2205034*, May 2022, <https://www.3gpp.org/ftp/tsg_ran/WG1_RL1/TSGR1_109-e/Docs/R1-2205034.zip